# EUROPEAN PATENT APPLICATION

(11) **EP 4 800 596 A1**
(43) Date of publication of application: **02.09.2026**
(21) Application number: 26154987.7
(22) Date of filing: 29.01.2026
(51) Int. Cl.: G06F 30/13, G06F 30/18

(54) **DESIGN SUPPORT DEVICE AND DESIGN SUPPORT SYSTEM**

(30) Priority: 26.02.2025 JP 2025028612
(71) Applicant: Hitachi, Ltd., Tokyo 100-8280 (JP); Hitachi GE Vernova Nuclear Energy, Ltd., Hitachi-shi, Ibaraki 317-0073 (JP)
(72) Inventor: HOSOKAWA, Yuji, Ibaraki, 317-0073 (JP); ISHIDA, Kazuya, Ibaraki, 317-0073 (JP); OSAKA, Masaaki, Tokyo, 100-8280 (JP); ISHIWATARI, Yuki, Tokyo, 100-8280 (JP); KONISHI, Wataru, Tokyo, 100-8280 (JP)
(74) Representative: MERH-IP Matias Erny Reichl Hoffmann Patentanwälte PartG mbB

(57) **Abstract**

A design support device (2) of the present invention includes: a virtual space creation unit (211) which creates image data of a virtual space simulating a site of a design target; a penetration creation support unit (213) which has a function of creating a penetration for a penetration formation target portion in the virtual space, and is capable of creating image data of an installation area image in which an image of an area where the penetration is formable is superimposed on an image of the penetration formation target portion in the virtual space in a case where information regarding a design specification of the penetration to be created in the penetration formation target portion is acquired from an external device; and a communication unit (23) which is communicably connected to the external device, receives information regarding a design specification of the penetration from the external device, and transmits image data of the installation area image created by the penetration creation support unit to the external device.

## Description

### Technical Field

The present invention relates to a design support device and a design support system.

### Background Art

Conventionally, various techniques related to design work of a power plant have been proposed (see, for example, Patent Literature 1). Patent Literature 1 discloses a device for creating three-dimensional arrangement adjustment CAD (Computer Aided Design) data for easily and quickly creating three-dimensional arrangement adjustment CAD data of an arrangement route of a cable housing component at the time of initial planning of plant design.

### Citation List

### Patent Literature

Patent Literature 1: JP2010-211652 A

### Summary of Invention

### Technical Problem

Meanwhile, in an existing plant (power plant or the like), in a case where an elongated-member equipment such as a pipe, a duct, or a conduit is newly installed so as to extend across different areas, it is necessary to provide a penetration (through hole) through a wall, a floor, and/or a ceiling provided between areas for allowing the elongated-member equipment to pass therethrough. However, since many facilities (interference objects) have been already installed in an existing plant, it takes a lot of effort to consider and design a formation position of the penetration. Note that, in the technique disclosed in Patent Literature 1 described above, design of a penetration for installing an elongated-member equipment has not been considered.

The present invention has been made in view of the above circumstances, and an object of the present invention is to provide a design support technique that facilitates the design of a penetration provided on a wall, a floor, a ceiling, or the like in a plant.

### Solution to Problem

In order to solve the above problems, a design support device of the present invention includes a virtual space creation unit, a penetration creation support unit, and a communication unit. The virtual space creation unit creates image data of a virtual space simulating a site of a design target. The penetration creation support unit has a function of creating a penetration for a penetration formation target portion in the virtual space. The penetration creation support unit is capable of creating image data of an installation area image in which an image of an area where the penetration is formable is superimposed on an image of the penetration formation target portion in the virtual space in a case where information regarding a design specification of the penetration to be created in the penetration formation target portion is acquired from an external device. The communication unit is communicably connected to the external device, receives information regarding a design specification of the penetration from the external device, and transmits image data of the installation area image created by the penetration creation support unit to the external device.

In order to solve the above problems, a design support system of the present invention includes an information processing device used by a user and a design support device of the present invention.

### Advantageous Effects of Invention

According to the present invention having the above-described configuration, it is possible to provide a design support technique that facilitates designing of a penetration provided on a wall, a floor, a ceiling, or the like in a plant.

### Brief Description of Drawings

Fig. 1 is a configuration diagram of a design support system according to an embodiment of the present invention.
Fig. 2 is a hardware configuration diagram of a computer device applicable as a design support device and a designer terminal included in the design support system according to an embodiment of the present invention.
Fig. 3 is a functional block configuration diagram of the design support device according to an embodiment of the present invention.
Fig. 4 is a functional block configuration diagram of a penetration creation support unit included in the design support device according to an embodiment of the present invention.
Fig. 5 is a functional block configuration diagram of the designer terminal included in the design support system according to an embodiment of the present invention.
Fig. 6 is a diagram illustrating an example of a planar image of a wall to which a penetration is formed when a penetration is designed using the design support device according to an embodiment of the present invention.
Fig. 7 is a diagram illustrating an example of input information of a penetration input when designing a penetration using the design support device according to an embodiment of the present invention.
Fig. 8 is a diagram illustrating an operation example of an installation area output unit in a penetration creation support unit of the design support device according to an embodiment of the present invention.
Fig. 9 is a diagram illustrating another example of a planar image of a wall to which a penetration is formed when a penetration is designed using the design support device according to an embodiment of the present invention.
Fig. 10 is a diagram illustrating an operation example of an installation area output unit in a penetration creation support unit of the design support device according to an embodiment of the present invention.
Fig. 11 is a diagram illustrating an operation example of a construction diagram output unit in a penetration creation support unit of the design support device according to an embodiment of the present invention.
Fig. 12 is a diagram illustrating an operation example of a position setting unit in the penetration creation support unit of the design support device according to an embodiment of the present invention.
Fig. 13 is a diagram illustrating an operation example of a position setting unit in the penetration creation support unit of the design support device according to an embodiment of the present invention.
Fig. 14 is a diagram illustrating an operation example of a route confirmation unit in the penetration creation support unit of the design support device according to an embodiment of the present invention.
Fig. 15 is a diagram illustrating an operation example of a route confirmation unit in the penetration creation support unit of the design support device according to an embodiment of the present invention.
Fig. 16 is a diagram illustrating an operation example of a penetration list output unit in the penetration creation support unit of the design support device according to an embodiment of the present invention.
Fig. 17 is a diagram illustrating a configuration example of a penetration list created by the operation of the penetration list output unit in the penetration creation support unit of the design support device according to an embodiment of the present invention.
Fig. 18 is a diagram illustrating a configuration example of a penetration list created by the operation of the penetration list output unit in the penetration creation support unit of the design support device according to an embodiment of the present invention.
Fig. 19 is a diagram for explaining a design method when a penetration is created in a wall in contact with a radiation-contaminated area by the penetration creation support unit of the design support device according to an embodiment of the present invention.
Fig. 20 is a diagram for explaining a design method when a penetration is created in a wall in contact with a radiation-contaminated area by the penetration creation support unit of the design support device according to an embodiment of the present invention.
Fig. 21 is a diagram for explaining a design method when a penetration is created in a wall in contact with a radiation-contaminated area by the penetration creation support unit of the design support device according to an embodiment of the present invention.
Fig. 22 is a configuration diagram of a design support system according to modification 1 of the present invention.

### Description of Embodiments

Hereinafter, a design support system according to an embodiment of the present invention and a design support device included in the design support system will be specifically described with reference to the drawings. Hereinafter, as an example, a design support system and a design support device that can be used in a power plant design operation will be described.

### <Configuration of a design support system>

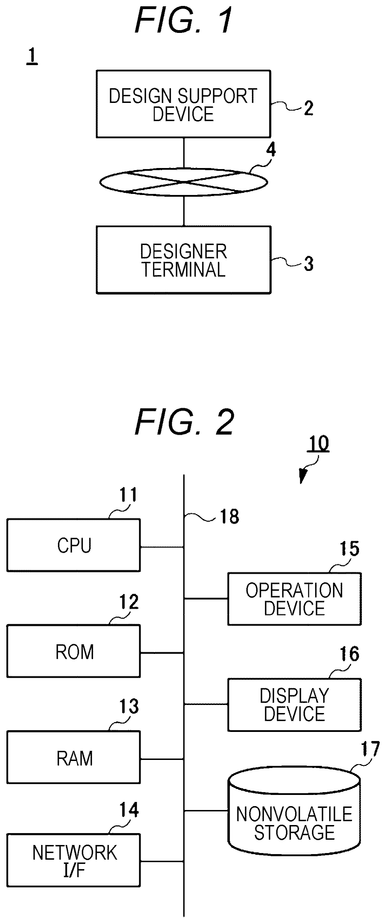

Fig. 1 is a configuration diagram of a design support system 1 according to an embodiment of the present invention. As illustrated in Fig. 1, the design support system 1 includes a design support device 2 and a designer terminal 3 (external device). Then, the design support device 2 is communicably connected to the designer terminal 3 via a communication network 4.

The design support device 2 is formed of an information processing device such as a computer device 10 described later (see Fig. 2 described later). The design support device 2 has various functions such as, for example, a function of creating a virtual space simulating an interior and exterior of a facility (site) such as a building of a power plant which is to be a design target, a function of creating an object of new equipment or updating an object of existing equipment in the virtual space by an input operation of a designer, and a design support function of a penetration (through hole) for installing an elongated-member equipment. Note that the "virtual space" ("virtual space" displayed on a display 34 of the designer terminal 3 which is described later) created by the design support device 2 includes not only a three-dimensional virtual space but also a two-dimensional virtual space.

The design support device 2 also has a function of inputting various CAD data of the power plant which is to be a design target and a function of reflecting (projecting or the like) the CAD data (hereinafter referred to as "CAD input information") input by a designer on the virtual space.

That is, the design support device 2 has various functions for supporting the design work of a designer in the virtual space simulating the interior and exterior of the facility such as a building of the power plant. Various functions of the design support device 2 will be described later with reference to the drawings. Note that the "object" referred to herein is equipment installed in a space or an outer wall in a facility such as a building of the power plant, such as a pipe, a duct, a conduit, a connection box, a valve, a board, a rack, and a device.

The designer terminal 3 is an information processing device used by a designer (user) engaged in plant design work, for example, a person in charge of design work such as system design, equipment design, construction design, or site construction plan, and includes an information processing device such as a computer device 10 described later (see Fig. 2 described later). Specifically, the designer terminal 3 can be formed by, for example, an information processing device having a calculation function and a communication function, such as a personal computer, a smartphone, or a tablet.

The designer terminal 3 receives various types of image data in the virtual space created by the design support device 2, and displays the various types of image data in the virtual space on the display 34 to be described later. In addition, the designer terminal 3 acquires operation information regarding an access operation of the designer to the virtual space created by the design support device 2, a work operation of the designer in the virtual space, and the like, and transmits operation information to the design support device 2 via the communication network 4. Further, the designer terminal 3 transmits various CAD input information input by the designer to the design support device 2.

Note that the design support device 2 that has received the operation information or the CAD input information from the designer terminal 3 performs image control processing to reflect a work content of the designer corresponding to the information in the virtual space. Specifically, the design support device 2 performs image control processing for reflecting the work content of the designer in, for example, the virtual space, an object, a penetration, and a wall, a floor, and/or a ceiling in which the penetration is to be formed. Then, the design support device 2 transmits the image data on the virtual space subjected to the image control processing to the designer terminal 3. As a result, an image reflecting the operation (work content) of the designer is displayed in the virtual space displayed on the display 34 to be described later of the designer terminal 3. Various functions of the designer terminal 3 will be described later with reference to the drawings.

The communication network 4 can include, for example, a local area network (LAN) or a wide area network (WAN) such as the Internet, and can perform wired or wireless communication. Note that, in a case where the design support device 2 and the designer terminal 3 are arranged at a short distance (for example, in a case where they are arranged in the same room), a short-range wireless communication method such as Bluetooth (registered trademark) or WiFi (registered trademark) may be used as a communication method in the communication network 4.

### <Hardware configuration of a design support device and a designer terminal>

Fig. 2 is a block diagram illustrating an example of a hardware configuration of the computer device 10 applicable as the design support device 2 and the designer terminal 3.

As illustrated in Fig. 2, the computer device 10 includes a central processing unit (CPU) 11, a read only memory (ROM) 12, and a random access memory (RAM) 13 connected to a bus line 18. In addition, the computer device 10 includes a network interface (I/F) 14 connected to the bus line 18, an operation device 15, a display device 16, and a nonvolatile storage 17. Although not illustrated in Fig. 2, the computer device 10 also includes various interfaces used when input/output processing of various data (various information) is executed with an external device.

The CPU11 reads a program code of software for realizing various processing functions provided in each of the design support device 2 and the designer terminal 3 from the ROM12 to the RAM13 and executes the program code. At this time, various data such as variables and parameters generated during the arithmetic processing are temporarily written in the RAM13.

The network I/F14 includes, for example, a network interface card (NIC) or the like, and transmits and receives various data relative to each device connected via wireless communication.

The operation device 15 includes, for example, keys, buttons, and the like, generates an operation signal corresponding to an operation content input by an operator (designer or the like), and supplies the operation signal to the CPU11. The display device 16 includes, for example, a liquid crystal panel, and displays characters, images, and the like on a screen. In addition, the display device 16 may be configured by a touch panel, and in this case, the display device 16 and the operation device 15 are integrally configured.

In the design support system 1 of the present embodiment, the designer operates the operation device 15 such as keys, buttons, a mouse, or a touch panel provided in the designer terminal 3 to execute various operations in the virtual space displayed on the display screen of the display device 16.

In addition, in the design support system 1 of the present embodiment, the designer can perform various operations in the virtual space using a head mounted display (HMD) and a controller used by being held in a hand or worn. In this case, in the designer terminal 3, the HMD in which the virtual space is displayed serves as the display device 16, and the controller for performing various operations in the virtual space displayed on the HMD serves as the operation device 15. Furthermore, in this case, in the designer terminal 3, the HMD (display device 16), the controller (operation device 15), and the CPU11 may be communicably connected using a short-range wireless communication system such as Bluetooth or WiFi.

The nonvolatile storage 17 can be formed by, for example, a hard disk drive (HDD), a solid state drive (SSD), a flexible disk, an optical disk, a magneto-optical disk, a compact disc (CD) -ROM, a CD-R, a magnetic tape, a nonvolatile memory, or the like. The nonvolatile storage 17 stores various programs for causing the computer device 10 to function as each of the design support device 2 and the designer terminal 3, in addition to an operating system (OS) and various parameters. Note that information (data) such as a program, a table, and a file for realizing each function provided in each of the design support device 2 and the designer terminal 3 may be stored in a recording medium such as an integrated circuit (IC) card, an SD card, and a digital versatile disc (DVD), for example, in addition to the ROM12 and the nonvolatile storage 17.

When the design support device 2 is configured as a server device, the design support device 2 may not include the operation device 15 and/or the display device 16 described above.

### <Configuration of a design support device>

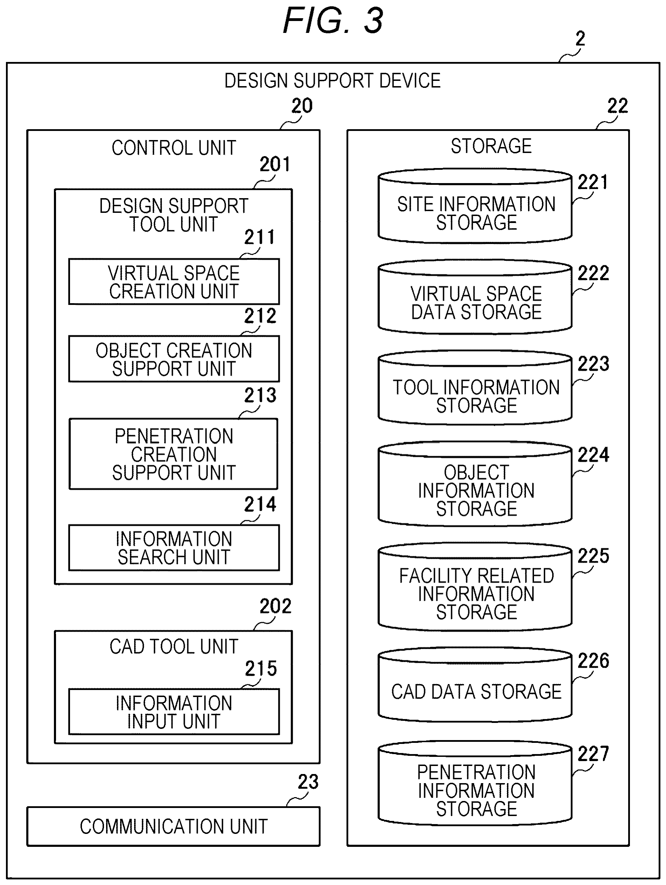

Fig. 3 is a functional block configuration diagram of the design support device 2 according to an embodiment of the present invention. As illustrated in Fig. 3, the design support device 2 includes a control unit 20, a storage 22, and a communication unit 23.

The control unit 20 is included in the CPU11 in Fig. 2, reads a program code for realizing various functions, which will be described later, executable by the design support device 2 from the ROM12 in Fig. 2 to the RAM13, and executes the program code. The storage 22 is included in the nonvolatile storage 17 and/or the RAM13 in Fig. 2, includes a memory capable of reading and writing data, and stores various types of information used in processing for realizing various functional units included in the control unit 20 and various types of design support information created at the time of execution of various functional units. In addition, the communication unit 23 is included in the network I/F14 in Fig. 2, and transmits and receives various types of information (data) relative to the designer terminal 3 connectable via the communication network 4. Hereinafter, an internal configuration of each unit included in the design support device 2 will be described.

### [Control unit]

As illustrated in Fig. 3, the control unit 20 functionally includes a design support tool unit 201 and a CAD tool unit 202. The design support tool unit 201 executes various support functions when a designer designs a power plant on the virtual space. For example, the design support tool unit 201 executes various functions such as a function of creating a virtual space of a power plant which is a design target, a function of creating an object of new equipment or updating an object of existing equipment on the virtual space, and a design support function of a penetration when installing an elongated-member equipment. In addition, the CAD tool unit 202 executes a function of inputting various CAD input information to the power plant which is a design target, and the like.

### (Configuration of design support tool unit)

As illustrated in Fig. 3, the design support tool unit 201 functionally includes a virtual space creation unit 211, an object creation support unit 212, a penetration creation support unit 213, and an information search unit 214. Hereinafter, an operation outline of each functional unit included in the design support tool unit 201 will be described.

### (1) Virtual space creation unit

The virtual space creation unit 211 creates image data of a virtual space that simulates an interior and exterior of a facility (site) such as a building of a power plant which is a design target. Specifically, the virtual space creation unit 211 creates image data of three-dimensional and two-dimensional virtual spaces using point cloud data of an actual site of the power plant which is a design target stored in a site information storage 221 to be described later in the storage 22 and/or three-dimensional CAD data of the site stored in a CAD data storage 226 to be described later. Note that an existing technology can be used as a method of creating image data of the virtual space. The virtual space creation unit 211 also performs image processing for reflecting CAD input information of the designer acquired via the communication network 4 and an information input unit 215 described later in the CAD tool unit 202 in the virtual space.

Then, the virtual space creation unit 211 outputs the created image data of the virtual space of the power plant (including the image data of the virtual space reflecting the CAD input information) to the communication unit 23. As a result, the image data of the virtual space of the power plant is transmitted to the designer terminal 3 via the communication network 4, and the image of the virtual space is displayed on the display 34 (for example, a liquid crystal panel or an HMD) to be described later of the designer terminal 3.

### (2) Object creation support unit

The object creation support unit 212 acquires, via the communication network 4, operation information corresponding to work such as object creation operation and various editing operations directly performed by the designer on the virtual space in the designer terminal 3, and performs image processing of the object according to the operation information. In addition, the object creation support unit 212 performs image processing for reflecting CAD input information of a designer acquired via the communication network 4 and the information input unit 215 to be described later in the CAD tool unit 202 in the object.

Then, the object creation support unit 212 outputs, to the communication unit 23, the image data of the object subjected to the image processing corresponding to the operation information of the designer and the CAD input information described above. As a result, the image data of the object after the image processing is transmitted to the designer terminal 3 via the communication network 4 and displayed on the display 34 (for example, a liquid crystal panel or an HMD) to be described later of the designer terminal 3. That is, an image reflecting an operation (work content) performed by the designer on the virtual space is displayed on the display 34 to be described later of the designer terminal 3.

More specifically, the object creation support unit 212 has the following various support functions regarding creation and/or editing work of an object of the designer in the virtual space.
- A function (object creation function) that allows a designer to generate a desired object and freely arrange the object at an arbitrary position in the virtual space.
- A function (object combining function) of combining a plurality of objects of the same type arranged in the virtual space to create one object.
- A function (cable route calculation function) of calculating an optimum cable route between two objects in a case where there is a plurality of cable routing paths (cable routes) for connecting the two objects (facilities) in the virtual space.
- A function (object arrangement determination function) of determining whether or not a predetermined object (equipment) created at a predetermined position in the virtual space satisfies an arrangement condition of the predetermined object.
- A function (object movement determination function) of, when a predetermined object (equipment) created at a predetermined position in the virtual space is moved in the virtual space, determining an interference state of another object (equipment such as an interference object) with respect to the movement of the predetermined object.

In addition, in the present embodiment, the function of selecting an object, the function of moving an object, and the function of displaying attribute information of an object can be operated in common at the time of executing the above-described various functions. Note that the attribute information includes, for example, various types of information such as a management number (management symbol), a name, an ID, an installation position (coordinates in the virtual space), an installation area name, a size, a type, a restriction condition on installation (arrangement), a creator, a comment of the creator, a creation date, and the like of the object, and these pieces of information are combined into one set.

In addition, the image data of the object created by the object creation support unit 212 is, for example, image data simulating equipment such as a pipe, a duct, a conduit, a connection box, a valve, a board, a rack, a device or the like. Such image data of the object for each type of the equipment which is a design target is stored in advance in a tool information storage 223 described later in the storage 22.

### (3) Penetration creation support unit

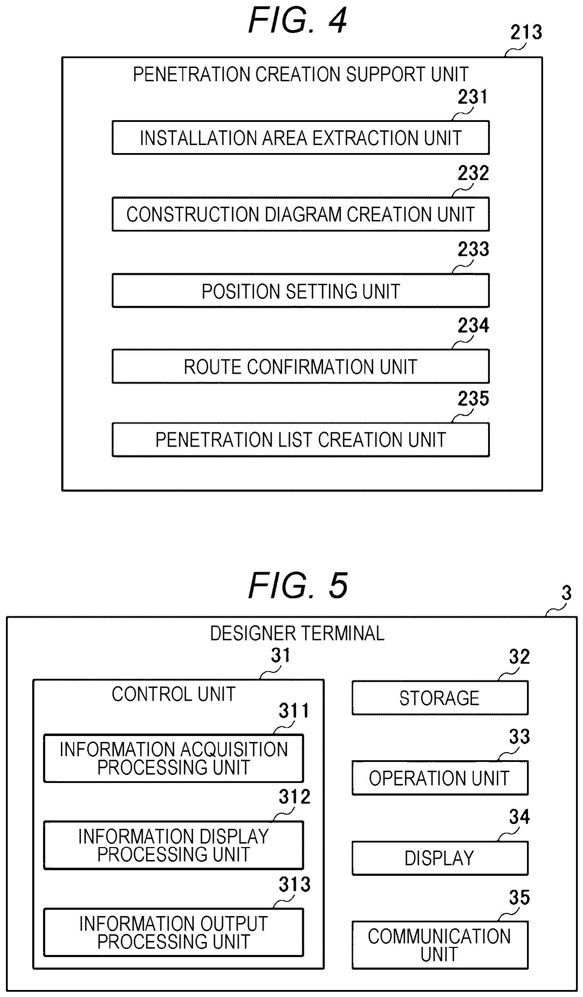

The penetration creation support unit 213 has various support functions when the designer performs design work of the penetration in the virtual space. For example, the penetration creation support unit 213 has various support functions for setting various types of design information such as an installation position, a size, and a construction method of a penetration (through hole) for passing an elongated-member equipment through a wall, a floor, and/or a ceiling that partition an area when the elongated-member equipment is installed across the areas in the power plant which is a design target. Fig. 4 illustrates an example of an internal configuration of the penetration creation support unit 213 for executing these various support functions. Fig. 4 is a functional block configuration diagram of the penetration creation support unit 213.

As illustrated in Fig. 4, the penetration creation support unit 213 functionally includes an installation area extraction unit 231, a construction diagram creation unit 232, a position setting unit 233, a route confirmation unit 234, and a penetration list creation unit 235. In addition, the penetration creation support unit 213 transmits image data and various types of information created by these functional units, that is, image data and various types of information reflecting the work content of the designer to the designer terminal 3 via the communication unit 23 and the communication network 4. As a result, the image data and various types of information created by each functional unit of the penetration creation support unit 213 are displayed on the display 34 to be described later of the designer terminal 3.

Note that an outline of processing performed by each functional unit is as follows. Specific contents of processing and operation performed by each functional unit will be described later with reference to the drawings.

The installation area extraction unit 231 determines whether or not there are one or more areas (hereinafter, referred to as an "installation area candidate") in which a penetration can be formed in a wall, a floor, a ceiling, or the like (hereinafter, collectively referred to as a "penetration formation target portion") in which the penetration is installed, based on CAD input information regarding design of the penetration. Note that the CAD input information regarding the design of the penetration input to the installation area extraction unit 231 includes, for example, information regarding design specifications of the penetration (opening shape, opening size, and the like of the through hole). In addition, in a case where a plurality of penetrations are formed in the penetration formation target portion, information regarding design specifications of each penetration is individually input to the installation area extraction unit 231 as CAD input information, and the installation area extraction unit 231 determines whether or not there are one or more installation area candidates capable of forming a plurality of penetrations on the penetration formation target portion based on the input information regarding the design specifications of the plurality of penetrations.

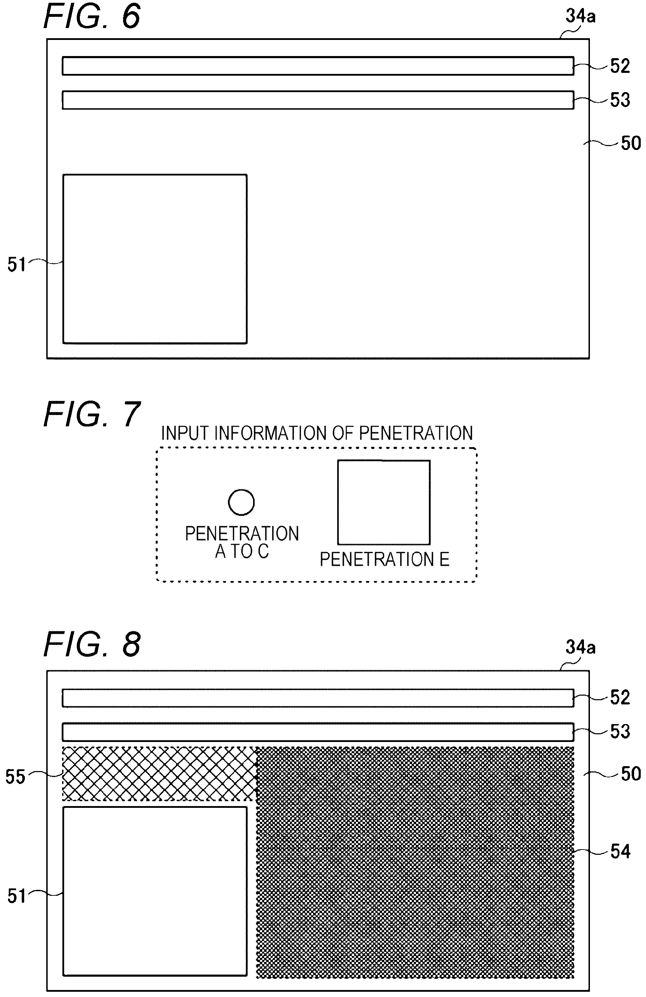

In a case where it is determined that there are one or more installation area candidates in which a penetration (or a plurality of penetrations) can be formed on the penetration formation target portion, the installation area extraction unit 231 extracts the one or more installation area candidates. Then, the installation area extraction unit 231 creates image data (see Fig. 8 and the like to be described later) in which the extracted area of the installation area candidate is mapped on the image of the virtual space including the penetration formation target portion and the existing object (interference object) arranged in and/or arranged close to the penetration formation target portion. That is, the installation area extraction unit 231 creates image data (image data of the installation area image) in which an image of an installation area candidate area is superimposed on an image of a penetration formation target portion (including an image of an existing object).

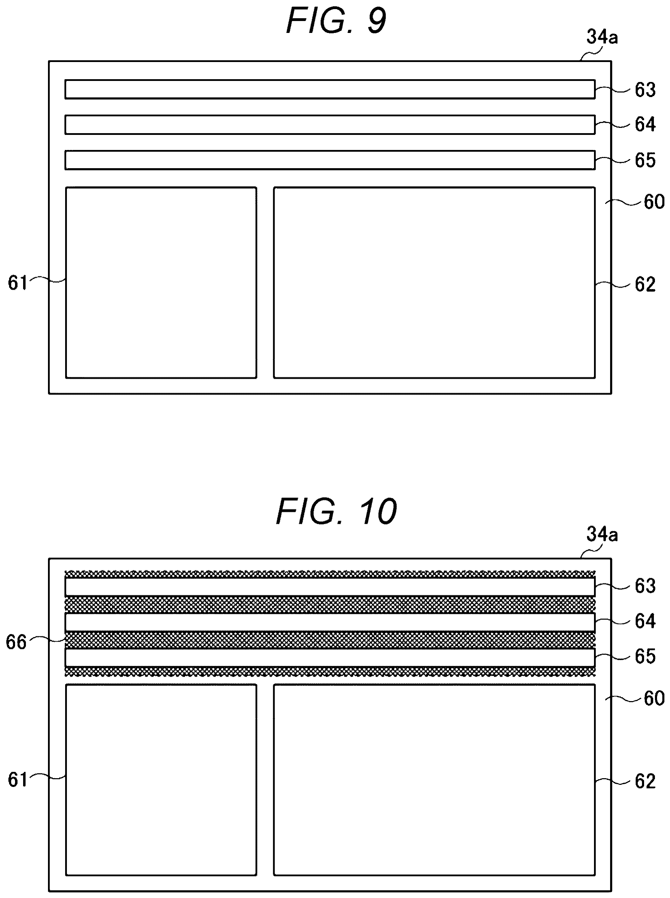

On the other hand, for example, in a case where it is determined that there is no installation area candidate where the penetration can be formed on the penetration formation target portion due to the influence of an object (interference object) installed around the penetration formation target portion, the installation area extraction unit 231 determines whether or not the object can be removed and the penetration can be formed in the installation area of the object if the object is removed based on information (information regarding the object) such as the type, the importance, the responsibility, and whether or not the object can be removed. Then, in a case where it is determined that the object can be removed and the penetration can be formed in the installation area of the object if the object is removed, the installation area extraction unit 231 extracts the installation area of the object as an installation area candidate. In this case, the installation area extraction unit 231 creates image data (see Fig. 9 and the like to be described later) in which the installation area of the object to be removed is mapped as an installation area candidate capable of forming the penetration on the image of the virtual space including the penetration formation target portion and the existing object (interference object) installed and/or arranged close to the penetration formation target portion.

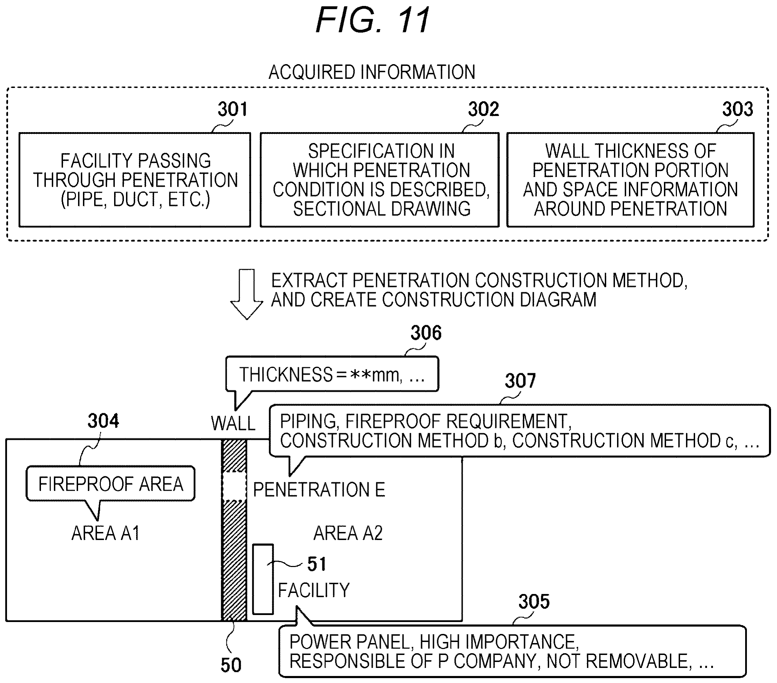

The construction diagram creation unit 232 searches for (refers to) and collects various information regarding the penetration, the penetration formation target portion of the penetration, and a peripheral area of the penetration, based on point cloud data of the site stored in the site information storage 221 in the storage 22 to be described later, three-dimensional CAD data of the site stored in a CAD data storage 226 to be described later, and information regarding a penetration which is a design target stored in a penetration information storage 227 to be described later. Then, the construction diagram creation unit 232 sets a construction method of the penetration based on the collected various information (design conditions of the penetration). Furthermore, the construction diagram creation unit 232 appropriately adds and reflects the collected various information and the information regarding the set construction method to a design diagram of a peripheral area of the penetration formation target portion, and creates a construction diagram of the periphery of the penetration formation target portion (see Fig. 11 to be described later).

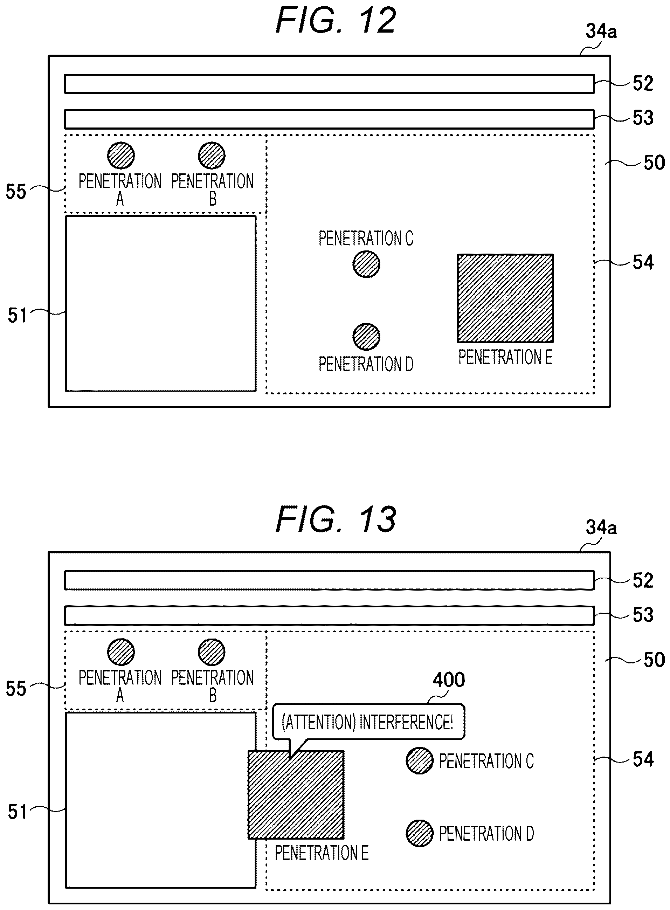

The position setting unit 233 creates image data in which an image of each penetration is superimposed on an image on the virtual space including a penetration formation target portion (a wall, a floor, or a ceiling) and an existing object (interference object) installed and/or arranged close to the penetration formation target portion based on CAD input information regarding a formation position of the penetration input by the designer. That is, the position setting unit 233 creates a position diagram (see Figs. 12 and 13 to be described later) illustrating a positional relationship between the penetration and the interference object installed in the penetration formation target portion and/or arranged close to the penetration formation target portion. Then, the position setting unit 233 determines whether or not the penetration overlaps (interferes with) the interference object on the position diagram, and creates image data in which an image of information indicating that formation (installation) of the penetration is not allowed is superimposed on the position diagram when the penetration overlaps the interference object. In a case where the position setting unit 233 determines that the penetration cannot be formed, the designer inputs the CAD input information regarding the formation position of the penetration again, and operates the position setting unit 233 again to reconfirm the formation position of the penetration.

The route confirmation unit 234 determines whether or not a predetermined penetration formed at the position set (determined) by the position setting unit 233 and an elongated object (hereinafter, referred to as a "counterpart elongated object".) arranged on the installation route of the elongated-member equipment and scheduled to be connected to the predetermined penetration are actually connectable at the site.

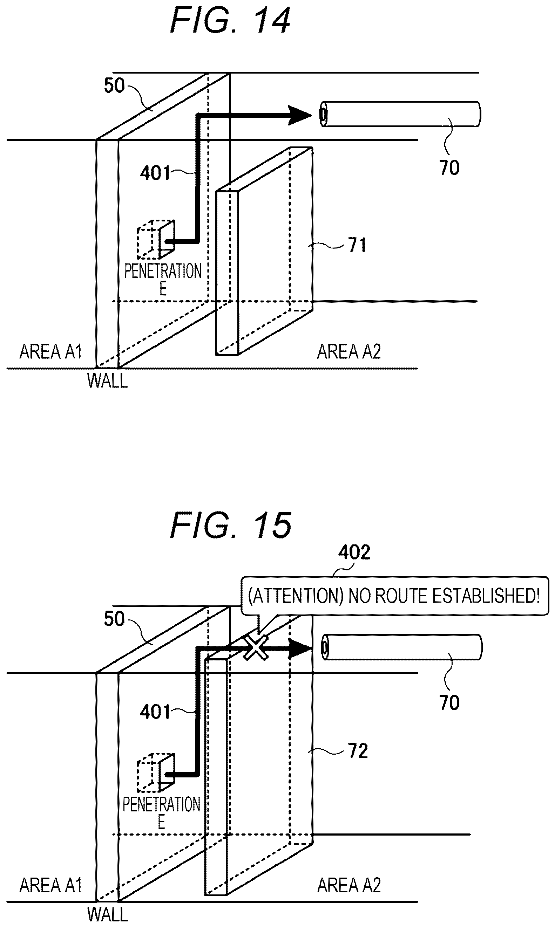

For example, in a case where there is no other existing interference object (equipment) that blocks the installation route of the elongated-member equipment between the opening of the predetermined penetration and the counterpart elongated object, the route confirmation unit 234 determines that the predetermined penetration and the counterpart elongated object can be connected by the installation route. In this case, the route confirmation unit 234 creates image data (see Fig. 14 described later) in which an image of the installation route is superimposed on an image of a virtual space including a predetermined penetration, a counterpart elongated object, and peripheral areas thereof.

On the other hand, for example, in a case where another existing interference object (equipment) is arranged between the opening of the predetermined penetration and the counterpart elongated object so as to block the installation route of the elongated-member equipment, the route confirmation unit 234 determines that the predetermined penetration and the counterpart elongated object cannot be connected by the installation route. In this case, the route confirmation unit 234 creates image data (see Fig. 15 to be described later) in which the image of the installation route and the image of information indicating that the predetermined penetration and the counterpart elongated object cannot be connected are superimposed on the image of the virtual space including the predetermined penetration and the counterpart elongated object and the peripheral area thereof.

The penetration list creation unit 235 creates information (hereinafter, referred to as a "penetration list") integrating the design items of the penetration when all the design review items of the penetration examined by the installation area extraction unit 231, the construction diagram creation unit 232, the position setting unit 233, and the route confirmation unit 234 described above have been satisfied and the design of the penetration is completed. In addition, the penetration list creation unit 235 stores the created penetration list in the penetration information storage 227.

Note that, in a case where the designer designs the penetration using the various functional units included in the penetration creation support unit 213 described above, the designer operates the installation area extraction unit 231, the construction diagram creation unit 232, the position setting unit 233, the route confirmation unit 234, and the penetration list creation unit 235 in this order, or operates the installation area extraction unit 231, the position setting unit 233, the construction diagram creation unit 232, the route confirmation unit 234, and the penetration list creation unit 235 in this order.

### (4) Information search unit

The design support device 2 of the present embodiment has a function of searching various kinds of related information of an object (equipment) (hereinafter, referred to as "object related information") arranged in the virtual space. Note that the object related information includes, for example, various types of information such as an actual exterior image (a photograph, an exterior drawing, or the like) of an object (equipment), a design drawing, a design specification, an equipment specification, an arrangement specification, legal information related to arrangement, and a responsibility (own company/another company's responsibility). The information search unit 214 performs search and collection processing of related information of an object (equipment) selected by an operation of a designer based on, for example, information such as a name included in attribute information of the object. At this time, a plurality of information search target objects may be selected.

The design support device 2 also has a function of searching various kinds of related information of a penetration formed in the penetration formation target portion (a wall, a floor, a ceiling, or the like) (hereinafter, referred to as "penetration related information") arranged in the virtual space. Note that the penetration related information includes, for example, various types of information such as an actual exterior image (a photograph, an exterior drawing, or the like) of a penetration and its periphery, a design drawing, a design specification, a specification, an installation condition of the penetration, and the like. The information search unit 214 performs search and collection processing of the penetration related information based on identification information (a name, a management symbol, an ID, and the like) of the penetration selected by an operation of a designer, identification information (a name, a management symbol, an ID, and the like) of a penetration formation target portion (a wall, a floor, a ceiling) in which the penetration is formed, and the like. At this time, a plurality of penetrations may be selected as the information search target.

As a search method of the object related information, the penetration related information, and the like by the information search unit 214, for example, an existing search method such as a method of performing a search in an interactive manner by generative artificial intelligence (AI) or a search method by keyword input can be used. In this case, it is possible to appropriately search and collect the object related information, the penetration related information, and the like desired by the designer.

When the designer performs a search operation for the object related information, the information search unit 214 searches (refers to) various types of information stored in an equipment related information storage 225 to be described later in the storage 22, and collects (acquires) the related information of the object to be searched from the various types of information. Then, the information search unit 214 outputs the collected object related information to the communication unit 23. As a result, the collected object related information is transmitted to each designer terminal 3 via the communication network 4, and the object related information is displayed in the virtual space displayed on the display 34 to be described later of each designer terminal 3.

When the designer performs a search operation for the penetration related information, the information search unit 214 searches (refers to) various types of information stored in the site information storage 221, the equipment related information storage 225, and the penetration information storage 227 described later in the storage 22, and collects (acquires) the related information of the penetration to be searched from the various types of information. Then, the information search unit 214 outputs the collected penetration related information to the communication unit 23. As a result, the collected penetration related information is transmitted to each designer terminal 3 via the communication network 4, and the penetration related information is displayed in the virtual space displayed on the display 34 to be described later of each designer terminal 3.

Note that, in the present embodiment, although not illustrated, an image of a search tool for object related information and penetration related information operable by a designer is displayed on a display screen of the display 34 (for example, a liquid crystal panel or an HMD) to be described later of the designer terminal 3, separately from the image of the virtual space. At this time, the image of the search tool for the object related information and the penetration related information may be controlled to be constantly displayed outside the image of the virtual space, for example, or may be controlled to be displayed superimposed on the image of the virtual space by an operation by the designer at the time of using the search tool for the object related information and the penetration related information. In addition, the search tool for the object related information and the penetration related information includes an execution button for information search function and the like, and the image data of the search tool is stored in advance in the tool information storage 223 described later in the storage 22.

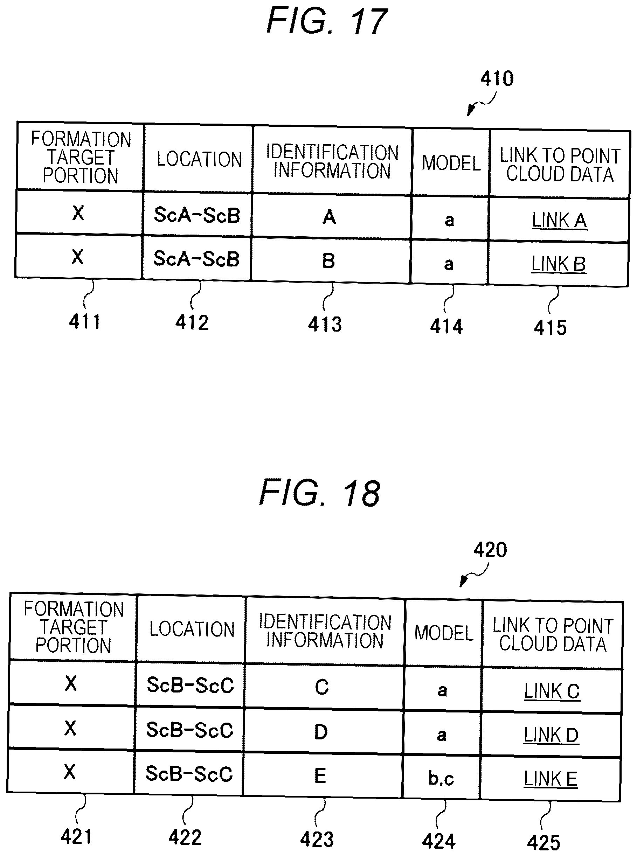

Then, at the time of executing the search, the designer selects an object (equipment) or a penetration as a search target in a virtual space displayed on the display 34 to be described later of the designer terminal 3 of the designer, and then operates an execution button of a search tool for object related information or penetration related information, whereby an image (input form or the like) indicating the start of the search for the object related information or the penetration related information is displayed. Next, the designer inputs information (word) serving as a search key for the object related information or the penetration related information to the displayed input form or the like, so that information search is executed, and a search result is displayed in the virtual space. Note that the present invention is not limited to this, and may be configured such that after the image indicating the start of the search for the object related information is displayed in the virtual space, the search for the object related information is automatically executed based on the attribute information of the object. In addition, after the image indicating the start of the search for the penetration related information is displayed in the virtual space, the search for the penetration related information may be automatically executed based on the identification information of the penetration and the identification information of the penetration formation target portion (see Figs. 17 and 18 to be described later). Furthermore, in the function of searching for the object related information or the penetration related information of the present embodiment, it is also possible to select a plurality of objects or a plurality of penetrations, and simultaneously search for the object related information of the plurality of objects or the penetration related information of the plurality of penetrations.

Note that, in the present embodiment, a configuration example has been described in which the object related information search function and the penetration related information search function are executed by one information search unit 214, but the present invention is not limited thereto. The search function unit for the object related information and the search function unit for the penetration related information may be provided separately, the former search function unit may be included in the object creation support unit 212, and the latter search function unit may be included in the penetration creation support unit 213.

### (Configuration of CAD tool unit)

As illustrated in Fig. 3, the CAD tool unit 202 functionally includes an information input unit 261. The information input unit 261 acquires (receives) CAD input information input by an operation of a designer on the designer terminal 3 via the communication network 4 and the communication unit 23, and outputs the acquired CAD input information to the design support tool unit 201. In the design support tool unit 201 to which the CAD input information is input, the virtual space creation unit 211, the object creation support unit 212, and/or the penetration creation support unit 213 perform processing according to the content of the CAD input information.

### [Storage]

The storage 22 stores, for example, various types of information necessary for creating the virtual space. The storage 22 stores, for example, point cloud data and three-dimensional CAD data of the actual site of the power plant which is a design target. Furthermore, the storage 22 also stores, for example, image data of a virtual space, image data of an object (equipment), attribute information of an object, related information of an object, image data of an avatar of each designer, various types of information regarding design of a penetration, and the like.

Specifically, as illustrated in Fig. 3, the storage 22 functionally includes the site information storage 221, a virtual space data storage 222, the tool information storage 223, an object information storage 224, the equipment related information storage 225, the CAD data storage 226, and the penetration information storage 227.

The site information storage 221 stores point cloud data (site information) of the actual site of the power plant which is to be a design target. These pieces of information on the site are stored in the site information storage 221 in advance, and are used when the virtual space creation unit 211 creates image data of a virtual space that simulates the interior and exterior of a facility (site) such as a building of a power plant.

The virtual space data storage 222 stores the image data of the virtual space created by the virtual space creation unit 211.

The tool information storage 223 stores, for example, image data of an object that is created in a virtual space and simulates facilities such as a pipe, a duct, a conduit, a power panel, a rack, a connection box, and a valve. That is, for example, image data of an object having a basic shape simulating equipment such as a pipe, a duct, a conduit, a power panel, a rack, a connection box, or a valve is stored in the tool information storage 223 in a form of a tool box. In addition, the tool information storage 223 stores image data of various operation tools (for example, an object creation tool, a search tool, and the like) that are superimposed on the virtual space or displayed at a position different from the virtual space and can be operated by the designer when executing the various functions described above. Furthermore, the tool information storage 223 also stores image data of the avatar of each designer displayed in the virtual space.

The object information storage 224 stores image data of an object created or changed (updated) by the object creation support unit 212 and attribute information of an object associated therewith.

The equipment related information storage 225 stores various types of information regarding facilities actually installed in the power plant which is to be a design target. For example, various object related information such as an actual exterior image (a photograph, an exterior drawing, or the like) of an object (equipment), a design drawing, a design specification, an equipment specification, an arrangement specification, legal information regarding arrangement, and a responsibility (responsible entity information) are stored in the equipment related information storage 225. In addition, the equipment related information storage 225 stores, for example, various types of information (for example, specification information such as a material, a thickness, a surface shape, and fire resistance, an exterior photograph, and the like) regarding structures such as a wall, a floor, and a ceiling provided around equipment (an object) in the power plant. In the present embodiment, an example in which the equipment related information storage 225 is provided in the design support device 2 will be described, but the present invention is not limited thereto, and the equipment related information storage 225 may be provided in a database or the like provided outside the design support device 2.

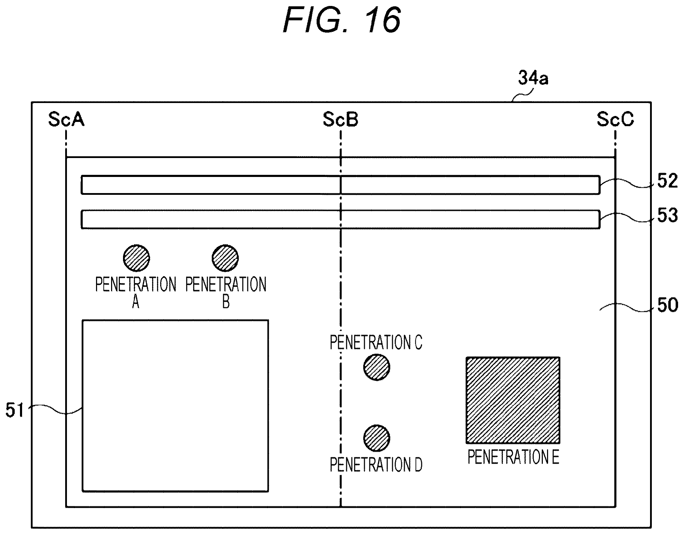

The CAD data storage 226 stores three-dimensional CAD data of an actual site of the power plant which is to be a design target. This information is stored in advance in the CAD data storage 226, and is used when the virtual space creation unit 211 creates image data of the virtual space that simulates the interior and exterior of a facility (site) such as a building of a power plant. The CAD data stored in the CAD data storage 226 is also used when the CAD data is projected (superimposed) and displayed on the virtual space (see Fig. 16 to be described later).

The penetration information storage 227 stores, for example, various types of information such as a construction diagram (see Fig. 11 to be described later) around a penetration formation target portion, a position diagram (see Figs. 12 and 13 to be described later) illustrating a positional relationship between a penetration and an interference object around the penetration, and a penetration list (see Figs. 17 and 18 to be described later) created by the penetration creation support unit 213. In addition, the penetration information storage 227 also stores, for example, identification information of a penetration formation target portion (a wall, a floor, a ceiling or the like) in which a penetration is formed, which is set at the time of setting an installation route of the elongated-member equipment, and type (for example, a pipe, a duct, a conduit, or the like) information of equipment passing through the penetration. Furthermore, the penetration information storage 227 stores, for example, information (a specification or the like) regarding a construction method of the penetration, and related information (a photograph, an exterior drawing, or the like) of the penetration such as past construction results of the penetration.

### [Communication unit]

The communication unit 23 transmits the virtual space created by the control unit 20, the image data of the object and the penetration, various types of information of the object (attribute information and the like), various types of information regarding the penetration (construction diagram, position diagram, penetration list, and the like), the image data of the avatar of each designer, and the like to the designer terminal 3 via the communication network 4. Furthermore, the communication unit 23 receives various types of operation information of the designer for the virtual space, the CAD input information input by the designer, and the like transmitted from the designer terminal 3, and outputs the received various types of information to the control unit 20.

### <Configuration of a designer terminal>

Fig. 5 is a functional block configuration diagram of the designer terminal 3. As illustrated in Fig. 5, the designer terminal 3 includes a control unit 31, a storage 32, an operation unit 33, the display 34, and a communication unit 35. For convenience of description, Fig. 5 illustrates only a processing functional unit related to the design support process executed by the design support device 2.

The control unit 31 is included in the CPU11 in Fig. 2, reads a program code for realizing various functions executable by the designer terminal 3 from the ROM12 in Fig. 2 to the RAM13, and executes the program code. The storage 32 is included in the nonvolatile storage 17 and/or the RAM13 in Fig. 2, and includes a memory capable of reading and writing data. The operation unit 33 is included in the operation device 15 in Fig. 2. The display 34 is included in the display device 16 in Fig. 2, and includes, for example, a liquid crystal panel, an HMD, or the like. Furthermore, the communication unit 35 is included in the network I/F 14 in Fig. 2, and transmits and receives various types of information (data) with the design support device 2 connectable via the communication network 4. Hereinafter, an outline of the configuration and operation of each unit included in the designer terminal 3 will be described.

### [Control unit]

As illustrated in Fig. 5, the control unit 31 functionally includes an information acquisition processing unit 311, an information display processing unit 312, and an information output processing unit 313.

The information acquisition processing unit 311 acquires various types of image data and various types of information created by the design support device 2, that is, various types of design support information, received by the communication unit 35.

Note that the various image data acquired by the information acquisition processing unit 311 includes, for example, various image data related to design support such as image data of the virtual space, image data of various objects (facilities), image data of the avatar of the designer, image data in which the image of the penetration is superimposed on the image of the penetration formation target portion (a wall, a floor, a ceiling, or the like), and the like. Furthermore, the various types of information acquired by the information acquisition processing unit 311 include, for example, attribute information and related information of the object, the penetration list and related information of the penetration, and the like. That is, the information acquisition processing unit 311 appropriately acquires various design support information (for example, image data of an installation area candidate of the penetration, which will be described later, image data of the construction diagram and the position diagram around the penetration formation target portion, information indicating that a setting route is not established, the penetration list, and the like) of the penetration received by the communication unit 35 at the design stage of the penetration.

Then, the information acquisition processing unit 311 outputs, to the information display processing unit 312, the virtual space, the various objects, and the various design support information related to various penetrations (various types of image data and various types of information relating to design support) acquired from the design support device 2. In addition, the information acquisition processing unit 311 stores the acquired various design support information in the storage 32.

The information display processing unit 312 outputs the virtual space, various objects, and various design support information related to various penetrations (various types of image data and various types of information relating to design support) acquired by the information acquisition processing unit 311 to the display 34, and performs control to display these on the display 34.

In addition, the information output processing unit 313 acquires, for example, an operation signal such as object creation operation, various editing operations (a change operation, a coupling operation, a moving operation, and the like), various determination operations (an arrangement determination operation, a movement determination operation, and the like), and input operation of various CAD input information performed on the virtual space by the designer via the operation unit 33, and outputs operation information corresponding to the operation signal to the communication unit 35. As a result, various operation information (work content information) of the designer for the virtual space is transmitted to the design support device 2 via the communication network 4.

### [Storage]

The storage 32 stores the virtual space, various objects, and various design support information related to various penetrations (various types of image data and various types of information relating to design support) acquired by the information acquisition processing unit 311 and displayed on the display 34. Furthermore, in the present embodiment, information on an operation performed on the virtual space by the designer may be stored in the storage 32 via the operation unit 33. That is, operation history information of the designer in the design support work of the power plant may be stored in the storage 32.

### [Operation unit]

The operation unit 33 includes, for example, a key, a button, a mouse, a touch panel, and the like provided in the designer terminal 3. Furthermore, in a case where the designer performs design support work using the HMD, the operation unit 33 includes a controller that the designer holds in the hand or wears. Then, in a case where the designer performs a predetermined operation (predetermined work) on the virtual space using the operation unit 33 such as a key, a button, a mouse, a touch panel, or a controller, for example, the operation unit 33 acquires an operation signal corresponding to the predetermined operation and outputs the operation signal to the control unit 31 (the information output processing unit 313).

### [Display]

The display 34 displays, on a display screen 34a provided in the display 34, the virtual space, and the various image data related to the design support of the various objects and the various penetrations input from the control unit 31 (the information display processing unit 312) (see Figs. 6 to 16 described later). In addition, the display 34 can also display attribute information and related information of various objects (facilities), the penetration list of various penetrations (see Figs. 17 and 18 to be described later), related information, and the like according to a request (operation) of a designer.

### [Communication unit]

The communication unit 35 receives, for example, the virtual space created by the design support device 2, various objects, and various design support information related to various penetrations (various types of image data and various types of information relating to design support) via the communication network 4. Furthermore, the communication unit 35 transmits, for example, operation information of the designer for the operation unit 33 input from the control unit 31 (the information output processing unit 313) to the design support device 2 via the communication network 4.

### <Operation example of various functions of a penetration creation support unit>

### [Outline of design procedure of penetration performed by designer]

Before describing a specific operation example of each functional unit in the penetration creation support unit 213, an outline of a design procedure of the penetration performed by a designer will be described.

In a case where an elongated-member equipment (for example, a pipe, a duct, a conduit, or the like) is newly installed across areas in an existing power plant, the design of the penetration for passing the elongated-member equipment formed in the penetration formation target portion (a wall, a floor and/or a ceiling) between the areas is generally performed according to the procedure of the following process.

(Step 1) Examination and setting of an installation route of an elongated-member equipment (hereinafter, referred to as an "elongated-member route").

(Step 2) Examination and setting of a penetration.

(Step 3) Examination and setting of a formation position of a penetration.

(Step 4) Examination and setting of a construction method of a penetration.

(Step 5) Detailed Examination and site investigation of an installation position of a penetration.

(Step 6) Clarification of an interference object (existing equipment and the like) around the installation position of a penetration.

In the step 1, the designer sets the elongated-member route. As a setting method, for example, a method in which the designer manually sets the elongated-member route with reference to a design drawing or the like may be adopted, or a method in which the elongated-member route is set on the virtual space of the site created by the design support device 2 may be adopted. At this time, a plurality of elongated-member routes may be set regardless of the setting method. In addition, at this time, regardless of the setting method, the designer specifies the penetration formation target portion (a wall, a floor and/or a ceiling) on the elongated-member route where the penetration needs to be formed, and also sets the type of the elongated-member equipment (for example, a pipe, a duct, a conduit, or the like) to be passed (stored) through each penetration formed in each penetration formation target portion.

In the step 1, for example, in a case where a method using the design support device 2 is used as a method of setting the elongated-member route, the designer uses the object creation function of the object creation support unit 212 to set the elongated-member route. At this time, a penetration formation target portion (a wall, a floor and/or a ceiling) on the elongated-member route where a penetration needs to be formed is automatically specified, and identification information (a name, a management symbol, an ID, and the like) of the penetration formation target portion is stored in the storage 22 (penetration information storage 227). At this time, the designer sets a type of an elongated-member equipment (for example, a pipe, a duct, a conduit, or the like) to be passed through each penetration formed in each penetration formation target portion in the virtual space, and stores the setting information in the storage 22 (the penetration information storage 227). Furthermore, in the step 1, the designer creates an elongated object on the virtual space as appropriate along the set elongated-member route, and stores information (image data, attribute information) of the elongated object in the storage 22 (the object information storage 224). At this time, the designer may set an optimal elongated-member route using a cable route calculation function of the object creation support unit 212 of the design support tool unit 201.

In the step 2, the designer sets an opening diameter (an opening size), an opening shape (an opening shape), and the like of each penetration based on the type of the elongated-member equipment (for example, a pipe, a duct, a conduit, or the like) to be passed through (stored in) each penetration formed in each penetration formation target portion (a wall, a floor or a ceiling) and information such as a drilling method.

In the step 3, the designer sets the formation position of each penetration in each penetration formation target portion (a wall, a floor or a ceiling).

In the step 4, the designer examines and extracts design (formation) conditions of the penetration based on conditions of a formation area of the penetration, conditions set in the penetration formation target portion (a wall, a floor, a ceiling or the like), and the like. In the examination of the design condition of the penetration, the designer refers to, for example, the virtual space, the three-dimensional CAD data, the design drawing, and the like to acquire information of the area around the penetration (the area defined by the penetration, and the like), and examines the design condition to be considered when creating the penetration. Then, the designer sets the construction method according to the design condition of each penetration based on the design condition of each penetration in each penetration formation target portion (a wall, a floor or a ceiling).

As design conditions (hereinafter, referred to as "penetration conditions") to be considered when creating a penetration, for example, it is examined, for example, whether an area defined by the penetration is an area where normal work can be performed (a safety area or the like), a fireproof area, an explosion-proof area, a radiation-contaminated area, and the like, and any restriction such as a fireproof requirement, an airtightness requirement, a water intrusion (water sealing treatment) requirement, a rainproofing requirement, a relative displacement requirement, a soil pressure requirement, an oil prevention requirement, a watertightness requirement, a lead-wool requirement, and the like is imposed in a formation area of the penetration or in a penetration formation target portion, or the like.

In the penetration formation target portion for which the airtightness requirement is specified, the penetration cannot be formed in the penetration formation target portion. In the penetration formation target portion in which the water intrusion requirement is set, a water stop treatment is required, and the water intrusion requirement is, for example, a design condition to be considered when the penetration is formed on a wall of an area in which a water leak is assumed, a floor below a sea surface, or the like. When the penetration is formed across different buildings, a relative displacement requirement is set. In this case, it is necessary to create the penetration in consideration of a change (displacement) in a distance between the buildings (a distance of a gap) due to an earthquake or the like. In addition, when the outdoor side of the penetration is in the ground, a soil pressure requirement is set. In this case, in order to prevent water leakage from the outdoors to the indoors through the penetration by the soil pressure, it is necessary to form the penetration by a dedicated construction method.

Then, in the step 5, the designer conducts a site survey on the installation position (formation position) of the penetration, and examines whether or not the penetration can be actually formed. In a case where the penetration cannot be formed, the designer returns to the step 3 and repeats the examination and setting after the step 3. In addition, in the step 6, the designer clarifies an interference object (existing equipment or the like) around the installation position of the penetration and on the elongated-member route, and examines whether or not the penetration can be formed. In a case where the penetration cannot be formed, the process returns to the step 3, and the examination and setting after the step 3 are repeated. Then, in a case where the penetration can be formed in the step 6, the designer proceeds to work of creating a scribing diagram, an interference object removal diagram, and the like.

In the series of design procedures for the penetration performed by the designer described above, in particular, in the step 3 and subsequent steps, unless the design of the penetration is advanced by sufficiently grasping the site situation of the power plant, the penetration cannot be formed in the site investigation of the step 5, and the penetration is reexamined. In this case, unnecessary time is required. Therefore, in the design of the penetration, an important point in the design of the penetration is how accurately and quickly the consideration and setting of the step 3 are performed by sufficiently grasping the site situation. Therefore, in the design support system 1 according to the present embodiment, various functional units included in the penetration creation support unit 213 in the design support tool unit 201 support the examination after the step 3 described above, support the design and construction plan of the penetration, and increase the accuracy and speed of the design of the penetration.

Hereinafter, a specific operation example of each functional unit (the installation area extraction unit 231, the construction diagram creation unit 232, the position setting unit 233, the route confirmation unit 234, and the penetration list creation unit 235) provided in the penetration creation support unit 213 will be described.

### [Operation example of installation area extraction unit]

Fig. 6 is a planar image of a wall 50 (an example) on the virtual space which is the formation target of the penetration displayed on the display screen 34a of the display 34 of the designer terminal 3. In addition, in the example illustrated in Fig. 6, images (planar images) of an equipment object 51 arranged close to the wall 50 on the virtual space and the two elongated objects 52, 53 installed on the wall 50, which can be interference objects of the penetration, are also displayed in a superimposed manner on the image of the wall 50. Note that Fig. 6 illustrates an example in which the existing equipment object 51 is installed near a lower left corner of the wall 50, and the existing two elongated objects 52, 53 are installed in parallel along a vicinity of an upper side (near the ceiling) of the wall 50.

Fig. 7 illustrates an example of a configuration of a penetration formed in the wall 50 illustrated in Fig. 6. In the example illustrated in Fig. 7, an example in which four penetrations A to D having a circular opening shape and a penetration E having a rectangular opening shape are formed in the wall 50 is illustrated. The opening sizes of the four penetrations A to D are the same, and the opening size of the penetration E is larger than the size of the penetrations A to D.

After the designer accesses the virtual space, in a state where the wall 50 illustrated in Fig. 6 is displayed on the display screen 34a of the designer terminal 3, the opening shape and the opening size (information regarding the design specification of the penetration) of each of the four penetrations A to D and the penetration E illustrated in Fig. 7 are input as the CAD input information using the operation unit 33, and the activation operation of the installation area extraction unit 231 is performed. The activation operation of the installation area extraction unit 231 is performed, for example, by pressing an execution button (not illustrated) of the installation area extraction function displayed on the display screen 34a of the designer terminal 3. By this operation, the CAD input information and an operation command of the installation area extraction unit 231 are transmitted to the installation area extraction unit 231 in the penetration creation support unit 213 via the communication unit 35 of the designer terminal 3, the communication network 4, the communication unit 23 of the design support device 2, and the information input unit 215 in the CAD tool unit 202.

On the other hand, the installation area extraction unit 231 to which the CAD input information (the opening shape and the opening size of the penetration) and the operation command are input determines whether or not there is an installation area candidate where the penetrations A to E can be formed on the wall 50 based on the arrangement positions of various existing interference objects (the equipment object 51, the two elongated objects 52, 53) near the wall 50, the opening sizes of the penetrations A to E, and the like. In this determination, when it is determined that there is an installation area candidate on the wall 50 where the penetrations A to E can be formed, the installation area extraction unit 231 creates image data in which the extracted area of the installation area candidate is mapped on the image of the wall 50. That is, the image data in which the extraction result of the installation area candidate where the penetrations A to E can be formed by the installation area extraction unit 231 is reflected in the image data of the wall 50 is created. In a case where a plurality of installation area candidates are extracted, the installation area extraction unit 231 maps each of the installation area candidates in a different manner.

Then, the installation area extraction unit 231 outputs the image data of the wall 50 to which the area of the installation area candidate is mapped to the communication unit 23. As a result, the image data of the wall 50 to which the area of the installation area candidate is mapped is transmitted to the designer terminal 3 via the communication network 4, and the image data is displayed on the display screen 34a of the designer terminal 3.

Fig. 8 is an image (planar image) of the wall 50 to which the area of the installation area candidate is mapped, displayed on the display screen 34a of the designer terminal 3. In the example illustrated in Fig. 8, the installation area extraction unit 231 extracts an installation area candidate 54 in which all of the penetrations A to E can be formed and an installation area candidate 55 in which only the penetrations A to D can be formed, and the areas of the respective installation area candidates are mapped in different modes. As a result, the designer can easily and quickly recognize that the penetrations A to E can be formed in the wall 50, and can easily and quickly recognize the formable area.

Note that, here, an example has been described in which, in the penetration formation target portion (a wall, a floor, or a ceiling), the area of the installation area candidate 55 in which some of the plurality of penetrations can be formed is also mapped, but the present invention is not limited thereto. Only an installation area candidate area in which all of the plurality of penetrations can be formed may be mapped. In addition, as a method of extracting an area of the installation area candidate on the image (planar image) of the wall 50, for example, an extraction method used in an existing image processing technology or the like can be used.

### [Another operation example of installation area extraction unit]

Here, various types of processing performed by the installation area extraction unit 231 in a case where it is determined that there is no installation area candidate in the processing of determining whether there is an installation area candidate of the penetrations A to E by the installation area extraction unit 231 will be described.

Fig. 9 is a planar image of a wall 60 (an example) on the virtual space which is a formation target of the penetration displayed on the display screen 34a of the display 34 of the designer terminal 3, and is a planar image of the wall 60 on which it can be determined that there are no installation area candidates of the penetrations A to E. In the example illustrated in Fig. 9, two existing equipment objects 61, 62 are arranged close to the wall 60, and the two equipment objects 61, 62 are arranged so as to block a vicinity of a lower portion (the vicinity of the floor) of the wall 60. In addition, the example illustrated in Fig. 9 illustrates an example in which three existing elongated objects 63 to 65 are installed in parallel along a vicinity of an upper side (the vicinity of the ceiling) of the wall 60, and the three elongated objects 63 to 65 are arranged so as to block the spaces above the two equipment objects 61, 62. Similarly to the example illustrated in Fig. 7, the penetrations formed in the wall 60 are four penetrations A to D having a circular opening shape and a penetration E having a rectangular opening shape.

In the arrangement mode of the two equipment objects 61, 62 and the three elongated objects 63 to 65 with respect to the wall 60 illustrated in Fig. 9, since the surface of the wall 60 is substantially covered with these interference objects, the installation area extraction unit 231 determines that there is no installation area candidate of the penetrations A to E.

However, in this case, the installation area extraction unit 231 lists the facilities that can be removed in order of ease of removal based on, for example, information such as the equipment type, the importance level, the responsibility (responsible entity information (own company/another company) of the equipment), and whether or not removal is possible, which are defined for each object. At this time, information (a type of equipment, a degree of importance, responsibility, or the like) serving as a criterion (priority) of ease of removal is set in advance by a designer. Next, the installation area extraction unit 231 performs the processing of determining whether or not installation area candidates of the penetrations A to E can be obtained in a case where an object (equipment) that is easily removed (removable) is removed. Then, in a case where it is determined in the determination processing that the installation area candidates of the penetrations A to E can be obtained by removing the object (equipment) that can be removed, the installation area extraction unit 231 extracts an arrangement area of the object (equipment) that can be removed as an installation area candidate, and maps the area of the installation area candidate. At this time, the area of the installation area candidate is mapped by being superimposed on the image of the object to be removed.

In the example illustrated in Fig. 9, it is assumed that the equipment objects 61, 62 are facilities that are difficult to remove, and the elongated objects 63 to 65 are facilities that are easy to remove (removable). In this case, the area after the removal of the elongated objects 63 to 65 has a size capable of forming the penetrations A to E. Therefore, in the example illustrated in Fig. 9, the installation area extraction unit 231 extracts an arrangement area of the elongated objects 63 to 65 that are easy to remove (removable) as an installation area candidate, and creates image data that is mapped while superimposed on the image of the elongated objects 63 to 65.

Then, the installation area extraction unit 231 outputs the image data of the wall 60 to which the area of the installation area candidate is mapped to the communication unit 23. As a result, the image data of the wall 60 to which the area of the installation area candidate is mapped is transmitted to the designer terminal 3 via the communication network 4, and the image data is displayed on the display screen 34a of the designer terminal 3. An example thereof is illustrated in Fig. 10.

In the example illustrated in Fig. 10, on the display screen 34a of the designer terminal 3, an installation area candidate 66, which is mapped so as to be superimposed on the image of the elongated objects 63 to 65, is displayed in the arrangement area of the elongated objects 63 to 65 that can be easily removed (removable). As a result, the designer can easily and quickly recognize that the penetrations A to E can be formed on the wall 60 by removing the elongated objects 63 to 65.

### [Operation example of construction diagram creation unit]

When the designer performs the activation operation of the construction diagram creation unit 232 in the virtual space displayed on the display screen 34a of the designer terminal 3, an operation command of the construction diagram creation unit 232 is transmitted to the construction diagram creation unit 232 in the penetration creation support unit 213 via the communication unit 35 of the designer terminal 3, the communication network 4, the communication unit 23 of the design support device 2, and the information input unit 215 in the CAD tool unit 202. Note that the activation operation of the construction diagram creation unit 232 is performed, for example, by pressing an execution button (not illustrated) of a construction diagram creation function displayed on the display screen 34a of the designer terminal 3.

Then, the construction diagram creation unit 232 to which the operation command is input creates a construction diagram around the penetration formation target portion where the penetration which is a design target is formed as follows. Fig. 11 is a diagram illustrating an operation example of the construction diagram creation unit 232. Note that, in the example illustrated in Fig. 11, an example of creating construction diagrams of two areas (an area A1 and an area A2) defined by the wall 50 illustrated in Fig. 6 is illustrated, and an example in which the area A1 is a fireproof area and the area A2 is an area where normal work can be performed is illustrated. In addition, in Fig. 11, in order to simplify the description, only the penetration E is illustrated among the penetrations A to E formed in the wall 50 illustrated in Fig. 6, and only the equipment object 51 (interference object) is illustrated as the interference object arranged and/or installed around the penetration.

When the operation command is input, the construction diagram creation unit 232 collects various types of information such as the following information 301 to 303 from the storage 22, for example.
· Information 301: information of a type of equipment (for example, a pipe, a duct, a conduit, or the like) passing through the penetration (the penetration E in the example illustrated in Fig. 11).
· Information 302: a specification describing a penetration condition (for example, an area where normal work is possible, a fireproof area (fireproof requirement), an explosion-proof area, a radiation-contaminated area, an airtightness requirement, a water intrusion requirement, a rainproofing requirement, a relative displacement requirement, a soil pressure requirement, an oil prevention requirement, a watertightness requirement, a lead-wool requirement, and the like) and a sectional (design) diagram of a peripheral area of the penetration.
· Information 303: a thickness of the penetration formation target portion (the wall 50 in the example illustrated in Fig. 11), and space information around the penetration, specifically, information such as a type, importance, a responsibility, availability of removal, and the like of an interference object (in the example illustrated in Fig. 11, an equipment object 51) arranged and/or installed around the penetration, for example.

The information 301 is set in advance at the time of setting the elongated-member route including the penetration which is a design target, and is stored in the penetration information storage 227. The information of the specification of the penetration condition included in the information 302 is stored in advance in the penetration information storage 227. The sectional (design) diagram of the peripheral area of the penetration included in the information 302 and the information 303 can be collected from the point cloud data of the site stored in the site information storage 221, the three-dimensional CAD data of the site stored in the CAD data storage 226, the information of the equipment stored in the equipment related information storage 225, and the like. Note that the information to be collected is not limited to the above example, and a part of various types of information included in the information 301 to 303 may not be collected, or other information may be collected in addition to the various types of information.

Next, the construction diagram creation unit 232 lists candidate construction methods for the penetration based on the collected various information (the information 301 to 303 and the like). At this time, when there are a plurality of candidates of construction methods, the plurality of construction methods are listed.

Then, the construction diagram creation unit 232 creates a construction diagram in which the collected various information (the information 301 to 303 and the like) and the information on the construction method of the penetration listed based on the collected various information are added to the sectional (design) diagram of the peripheral area of the penetration formation target portion in which the penetration is formed. Thereafter, the construction diagram creation unit 232 outputs image data of the created construction diagram to the communication unit 23. As a result, the image data of the construction diagram is transmitted to the designer terminal 3 via the communication network 4, and the construction diagram is displayed on the display screen 34a of the designer terminal 3.

In the example of the construction diagram displayed on the display screen 34a illustrated in Fig. 11, in the area A1 on one side of the opening of the penetration E, as the penetration condition, the information 304 indicating "a fireproof area" is additionally written in a balloon-style format, and in the equipment object 51, the information 305 indicating "a power panel, high importance, P company's responsibility, not removable,..." is additionally written in the balloon-style format. In addition, in the example of the construction diagram illustrated in Fig. 11, the information 306 indicating "thickness =**mm,..." is added to the wall 50 in the balloon-style format, and the information 307 indicating "a pipe, fireproof requirement, construction method a, construction method b,..." is added to the penetration E in the balloon-style format. Note that a display mode of various types of information on the construction diagram is not limited to this example, and can be arbitrarily set.

With the above operation of the construction diagram creation unit 232, the construction diagram around the penetration formation target portion as illustrated in Fig. 11 is displayed on the display screen 34a of the designer terminal 3, so that the designer can easily and quickly recognize the information on the penetration formation target portion (a wall, a floor, a ceiling or the like), the penetration condition, the construction method of the penetration, and the space information around the penetration.

### [Operation example of position setting unit]

When the designer inputs the formation position of the penetration on the penetration formation target portion (a wall, a floor, a ceiling or the like) as the CAD input information on the display screen 34a of the designer terminal 3 and performs the activation operation of the position setting unit 233, the CAD input information (the formation position of the penetration) and the operation command of the position setting unit 233 are transmitted to the position setting unit 233 in the penetration creation support unit 213 via the communication unit 35 of the designer terminal 3, the communication network 4, the communication unit 23 of the design support device 2, and the information input unit 215 in the CAD tool unit 202.

Note that the input operation of the formation position of the penetration by the designer is performed, for example, by inputting information of the formation position in an input form (not illustrated) of the formation position of the penetration displayed on the display screen 34a of the designer terminal 3. At this time, the designer performs an input operation of the formation position of the penetration with reference to the image of the penetration formation target portion (a wall, a floor, a ceiling or the like) on which the area of the installation area candidate displayed on the display screen 34a is mapped. In addition, the activation operation of the position setting unit 233 is performed, for example, by pressing an execution button (not illustrated) of the position setting function displayed on the display screen 34a of the designer terminal 3.

Then, the position setting unit 233 to which the CAD input information (the formation position of the penetration) and the operation command are input creates image data (position diagram data) in which the image of the penetration is superimposed on the formation position on the image of the penetration formation target portion (a wall, a floor, a ceiling or the like). At this time, the position setting unit 233 determines whether or not the image of the penetration and the image of the interference object (such as an equipment object or an elongated object) overlap (interfere) with each other in a case where the penetration is formed at the input formation position. Note that, as this determination method, for example, a method of determining the presence or absence of overlap between images used in an existing image processing technology or the like can be used.

Then, in a case where it is determined that the image of the penetration and the image of the interference object (such as an equipment object or an elongated object) do not overlap each other, the position setting unit 233 outputs the created image data (position diagram data) to the communication unit 23. As a result, the image data is transmitted to the designer terminal 3 via the communication network 4, and an image in which the image of the penetration is superimposed on the image of the penetration formation target portion (a wall, a floor, a ceiling or the like) (including the image of the object) is displayed on the display screen 34a of the designer terminal 3. An example thereof is illustrated in Fig. 12.

Fig. 12 is a planar image (a position diagram) in which the images of the penetrations A to E are superimposed on the image of the wall 50 (including the images of the equipment object 51 and the elongated objects 52, 53) illustrated in Fig. 6. In Fig. 12, for reference, the areas of the installation area candidates 54, 55 illustrated in Fig. 8 are surrounded by broken lines, but the areas of the installation area candidates 54, 55 are not displayed on the actual display screen 34a. However, the areas of the installation area candidates 54, 55 may be superimposed and displayed on the image in which the images of the penetrations A to E are superimposed on the image of the wall 50.

The example illustrated in Fig. 12 illustrates an example in which penetrations A and B are formed in the installation area candidate 55, and penetrations C to E are formed in the installation area candidate 54. Then, the designer can easily recognize that each penetration is formed in the area of the installation area candidate by viewing the image (position diagram) illustrated in Fig. 12 displayed on the display screen 34a, and therefore easily recognize that these positions can be adopted (determined) as the formation positions of the respective penetrations.

On the other hand, in a case where it is determined that the image of the penetration and the image of the interference object overlap each other, the position setting unit 233 further superimposes an image of caution information (warning) indicating that the penetration cannot be formed at the input formation position on the created image in which the image of the penetration is superimposed on the image of the penetration formation target portion (a wall, a floor, a ceiling or the like) (including the image of the interference object). Then, the position setting unit 233 outputs, to the communication unit 23, image data in which the image of the penetration and the image of caution information (warning) indicating that the penetration cannot be formed are superimposed on the image of the penetration formation target portion (including the image of the interference object). As a result, the image data is transmitted to the designer terminal 3 via the communication network 4, and the image in which the image of the penetration and the image of the caution information (warning) indicating that the penetration cannot be formed are superimposed on the image of the penetration formation target portion (including the image of the interference object) is displayed on the display screen 34a of the designer terminal 3. An example thereof is illustrated in Fig. 13.

Fig. 13 is a planar image in which the images of the penetrations A to E and the image of caution information 400 indicating that the penetration cannot be formed are superimposed on the image of the wall 50 (including the images of the equipment object 51 and the elongated objects 52, 53) illustrated in Fig. 6. In Fig. 13, for reference, the areas of the installation area candidates 54, 55 illustrated in Fig. 8 are surrounded by broken lines, but the areas of the installation area candidates 54, 55 are not displayed on the actual display screen 34a. However, the areas of the installation area candidates 54, 55 may be superimposed and displayed on the image in which the images of the penetrations A to E are superimposed on the image of the wall 50.

In the example illustrated in Fig. 13, an example is illustrated in which the penetrations A and B are formed in the installation area candidate 55, and the penetrations C and D are formed in the installation area candidate 54, but the penetration E is formed at a position slightly protruding from the installation area candidate 54 and overlaps (interferes with) the equipment object 51. In this case, the caution information 400 indicating that the penetration E cannot be formed, such as "(Attention) Interference!" with respect to the penetration E, is displayed in the balloon-style format. Note that the display mode of the caution information 400 is not limited to this example, and can be arbitrarily set.

As in the example illustrated in Fig. 13, in a case where the caution information 400 indicating that the penetration E cannot be formed is displayed, the designer inputs the formation positions of the penetrations A to E again and activates the position setting unit 233 again. Then, as in the example illustrated in Fig. 12, the designer repeatedly inputs formation positions (CAD input information) of the penetrations A to E until the penetrations A to E are formed in the areas of the installation area candidates 54, 55, and repeatedly operates the position setting unit 233.

By displaying the formation position of the penetration on the penetration formation target portion (a wall, a floor, a ceiling or the like) on the display screen 34a of the designer terminal 3 by the above-described operation of the position setting unit 233, the designer can easily and quickly recognize the formation position of the penetration and whether or not the penetration can be formed. As a result, the operation of setting (determining) the formation position of the penetration becomes easy, and the time of the setting operation can be shortened.

### [Operation example of route confirmation unit]

The route confirmation unit 234 outputs support information when the designer determines whether or not a new penetration formed on the penetration formation target portion (a wall, a floor, a ceiling or the like) and an elongated object provided on an elongated-member route in a target area that communicates with the penetration and is to be connected to the penetration, that is, a counterpart elongated object, are connectable.

When the designer performs the activation operation of the route confirmation unit 234 while the design target penetration is displayed on the display screen 34a of the designer terminal 3, an operation command of the route confirmation unit 234 is transmitted to the route confirmation unit 234 in the penetration creation support unit 213 via the communication unit 35 of the designer terminal 3, the communication network 4, the communication unit 23 of the design support device 2, and the information input unit 215 in the CAD tool unit 202. The activation operation of the route confirmation unit 234 is performed, for example, by pressing an execution button (not illustrated) of the route confirmation function displayed on the display screen 34a of the designer terminal 3.

The route confirmation unit 234 to which the operation command is input first creates image data in which a surrounding site of the penetration formation target portion (a wall, a floor, a ceiling or the like) in which a penetration which is a design target is formed is three-dimensionally displayed in a virtual space (hereinafter, referred to as "three-dimensional site image data"). The three-dimensional site image data is created based on the point cloud data of the site stored in the site information storage 221 and the three-dimensional CAD data of the site stored in the CAD data storage 226. In the three-dimensional site image data, for example, images of a penetration, a penetration formation target portion (a wall, a floor, a ceiling or the like) in which the penetration is formed, an area partitioned via the penetration formation target portion, objects of various facilities arranged in the area (including a counterpart elongated object), and the like are displayed.

Next, the route confirmation unit 234 creates image data in which the image of the elongated-member route corresponding to the penetration which is a design target is superimposed on the three-dimensional site image around the penetration. Then, the route confirmation unit 234 determines whether or not an interference object (object) blocking the route exists on the route connecting the penetration which is a design target in the elongated-member route and the counterpart elongated object on the three-dimensional site image on which the image of the elongated-member route is superimposed. This determination is made based on whether or not there is an overlap between the image of the elongated-member route and the image of the interference object (object). Note that, as this determination method, for example, a method of determining the presence or absence of overlap between images used in an existing image processing technology or the like can be used.

Then, in a case where it is determined that the image of the elongated-member route and the image of the interference object (object) do not overlap each other, the route confirmation unit 234 outputs, to the communication unit 23, created image data in which the image of the elongated-member route is superimposed on the three-dimensional site image around the penetration. As a result, the image data is transmitted to the designer terminal 3 via the communication network 4, and an image in which the image of the elongated-member route is superimposed on the three-dimensional site image around the penetration is displayed on the display screen 34a of the designer terminal 3. An example thereof is illustrated in Fig. 14.

Fig. 14 is an image in which an image of the elongated-member route 401 passing through the penetration E is superimposed on the three-dimensional site image around the wall 50 illustrated in Fig. 6. In Fig. 14, in order to simplify the description, only the penetration E among the penetrations A to E newly created in the wall 50 is illustrated. In addition, the example illustrated in Fig. 14 illustrates an example in which, in the area A2, the equipment object 71 is arranged as an interference object between the penetration E and a counterpart elongated object 70 and near the elongated-member route 401.

In the example illustrated in Fig. 14, the size of the equipment object 71 is relatively small, and the elongated-member route 401 is not blocked. In this case, caution information 402, which is described later, indicating that the elongated-member route is not established is not displayed on the display screen 34a. Therefore, the designer can easily and quickly recognize that the combination of the formation position of the penetration E and the elongated-member route 401 that is currently set can be adopted from the positional relationship among the elongated-member route 401 passing through the penetration E, the counterpart elongated object 70, and the equipment object 71 in the area A2 displayed on the display screen 34a.

On the other hand, in a case where it is determined that the image of the elongated-member route and the image of the interference object (object) overlap each other, the route confirmation unit 234 creates image data in which an image of a warning indicating that the elongated-member route 401 cannot be adopted is further superimposed on the created image in which the image of the elongated-member route is superimposed on the three-dimensional site image around the penetration. Then, the route confirmation unit 234 outputs, to the communication unit 23, image data in which the image of the elongated-member route and the image of the warning indicating that the elongated-member route cannot be adopted are superimposed on the three-dimensional site image around the penetration. As a result, the image data is transmitted to the designer terminal 3 via the communication network 4, and an image in which the image of the elongated-member route and the image of the warning indicating that the elongated-member route cannot be adopted are superimposed on the three-dimensional site image around the penetration is displayed on the display screen 34a of the designer terminal 3. An example thereof is illustrated in Fig. 15.

Fig. 15 is an image in which an image of the elongated-member route 401 passing through the penetration E and an image of a warning indicating that the elongated-member route 401 cannot be adopted are superimposed on the three-dimensional site image around the wall 50 illustrated in Fig. 6. In Fig. 15, in order to simplify the description, only the penetration E among the penetrations A to E newly created in the wall 50 is illustrated. In addition, the example illustrated in Fig. 15 indicates an example in which, in the area A2, an equipment object 72 (interference object) having a size that blocks the elongated-member route 401 is arranged between the penetration E and the counterpart elongated object 70.

Then, in the example illustrated in Fig. 15, as a warning indicating that the elongated-member route 401 cannot be adopted, a white cross mark is superimposed and displayed on the image of the elongated-member route 401, and caution information 402 indicating a word "(Attention) Route is not established!" is displayed in the balloon-style format. Note that the display mode of the warning is not limited to this example, and can be arbitrarily set.

The designer can easily and quickly recognize that the combination of the formation position of the penetration E and the elongated-member route 401 that is currently set cannot be adopted based on the warning indicating that the elongated-member route 401 cannot be adopted displayed on the display screen 34a. Note that, in this case, the designer appropriately reconsiders whether or not the equipment object 72 (interference object) can be removed (moved), a change in the elongated-member route 401 (the arrangement position of the counterpart elongated object 70), a change in the formation position of the penetration E, and the like.

By the above operation of the route confirmation unit 234, the designer can easily and quickly consider the possibility of adopting both the formation position of the penetration and the elongated-member route. In the present embodiment, the image of the elongated-member route is superimposed on the three-dimensional site image around the penetration formation target portion (a wall, a floor, a ceiling or the like), but the present invention is not limited thereto, and the image of the elongated-member route may not be superimposed on the three-dimensional site image around the penetration formation target portion. However, when the image of the elongated-member route is superimposed on the three-dimensional site image around the penetration formation target portion, the positional relationship between the elongated-member route and the interference object (object) becomes clearer, and it is easier to determine whether or not the setting route can be adopted.

### [Operation example of penetration list creation unit]

In a case where the designer creates a list of various pieces of information of the penetration finally determined using the various design support functions of the penetration described above, the designer performs an activation operation of the penetration list creation unit 235 on the display screen 34a of the designer terminal 3. Note that the activation operation of the penetration list creation unit 235 is performed, for example, by pressing an execution button (not illustrated) of the penetration list creation function displayed on the display screen 34a of the designer terminal 3. As a result, the operation command of the penetration list creation unit 235 is transmitted to the penetration list creation unit 235 in the penetration creation support unit 213 via the communication unit 35 of the designer terminal 3, the communication network 4, the communication unit 23 of the design support device 2, and the information input unit 215 in the CAD tool unit 202.

The penetration list creation unit 235 to which the operation command is input first creates image data (position diagram data) in which the image of the penetration is superimposed on the planar image (including an image of an interference object) of a penetration formation target portion (a wall, a floor, a ceiling or the like) which is the design target. Further, the penetration list creation unit 235 creates image data (two-dimensional image data) in which an image of grid lines of CAD on the planar image of the penetration formation target portion is projected (superimposed) on the position diagram of the penetration formation target portion based on the CAD data of the penetration formation target portion which is the design target.

Then, the penetration list creation unit 235 outputs, to the communication unit 23, image data obtained by projecting the image of grid lines of CAD onto the position diagram of the penetration formation target portion. As a result, the image data is transmitted to the designer terminal 3 via the communication network 4, and an image (a two-dimensional image) in which the grid lines of CAD are projected on the position diagram of the penetration formation target portion is displayed on the display screen 34a of the designer terminal 3. An example thereof is illustrated in Fig. 16.

Fig. 16 is a planar image obtained by projecting (superimposing) three grid lines ScA, ScB, ScC of CAD on the image of the wall 50 on which the penetrations A to E illustrated in Fig. 12 are formed (position diagram, including the images of the equipment object 51 and the elongated objects 52, 53). In this way, the designer can easily and quickly recognize the arrangement (formation) positions of the penetrations A to E on the CAD by seeing the image in which the three grid lines ScA, ScB, ScC of CAD are projected (superimposed) on the image (position diagram) in which the penetrations A to E are formed on the wall 50 displayed on the display screen 34a.

In addition, the penetration list creation unit 235 creates a penetration list in which, for example, identification information of a penetration formation target portion which is the design target, identification information of a penetration to be formed, information (model information) on a construction method of a penetration, and the like are collected for each area in a penetration formation target portion (a wall, a floor, a ceiling or the like) defined by the grid lines on CAD. Note that the penetration list created by the penetration list creation unit 235 is stored in the penetration information storage 227 in the storage 22.

Figs. 17 and 18 are examples of a penetration list created from the image obtained by projecting (superimposing) three grid lines ScA, ScB, ScC of CAD on the image (position diagram) in which penetrations A to E are formed in the wall 50 illustrated in Fig. 16. Fig. 17 is an example of a penetration list 410 of the area between the grid line ScA and the grid line ScB on the wall 50 illustrated in Fig. 16, and Fig. 18 is an example of a penetration list 420 of the area between the grid line ScB and the grid line ScC on the wall 50 illustrated in Fig. 16. In the example illustrated in Figs. 17 and 18, each penetration list is tabular data.

As illustrated in Fig. 17, the penetration list 410 of the area between the grid line ScA and the grid line ScB defines identification information 411 of the formation target portion (a wall, a floor, a ceiling or the like) of the penetration, a location 412 of the penetration, identification information 413 of the penetration, a model 414 (information regarding the construction method) of the penetration, and link information 415 to the point cloud data as one set in association with each other. In addition, as illustrated in Fig. 18, the penetration list 420 of the area between the grid line ScB and the grid line ScC defines identification information 421 of the formation target portion of the penetration, a location 422 of the penetration, identification information 423 of the penetration, a model 424 (information regarding the construction method) of the penetration, and link information 425 to the point cloud data as one set in association with each other.

Note that, as the identification information 411, 421 of the formation target portion of the penetration in each penetration list, for example, information such as a name, a management symbol, an ID, and the like for identifying the formation target portion (a wall, a floor or a ceiling) is defined. As the location 412, 422 of the penetration, any information can be defined as long as it is information indicating a formation area of the penetration defined by grid lines of CAD. As the identification information 413, 423 of the penetration, for example, information such as a name, a management symbol, and an ID for identifying the penetration is defined. As the model 414, 424 of the penetration, information (for example, a name, a management symbol, and the like) indicating the type of construction method is defined. Furthermore, as the link information 415, 425 to the point cloud data, link information for jumping to a storage address of related information such as a picture or a specification of the periphery of the penetration stored in the site information storage 221 in the storage 22 and reading the related information is set.

In the example illustrated in Fig. 16, the penetrations A, B are formed in the area between the grid line ScA and the grid line ScB, and the penetrations C to E are formed in the area between the grid line ScB and the grid line ScC. Therefore, in the penetration list 410 of the area between the grid line ScA and the grid line ScB as illustrated in Fig. 17, for the penetration A, a management symbol "X" of the wall 50 is defined as the identification information 411 of the formation target portion, information "ScA-ScB" indicating the area between the grid line ScA and the grid line ScB is defined as the location 412 of the penetration, a management symbol "A" of the penetration A is defined as the identification information 413 of the penetration, a management symbol "a" of the construction method a of the penetration A is defined as the model 414 of the penetration, and "link A" is defined as the link information 415 to the point cloud data. In the penetration list 410, for the penetration B, a management symbol "X" of the wall 50 is defined as the identification information 411 of the formation target portion, information "ScA-ScB" is defined as the location 412 of the penetration, a management symbol "B" of the penetration B is defined as the identification information 413 of the penetration, a management symbol "a" of the construction method a of the penetration B is defined as the model 414 of the penetration, and a "link B" is defined as the link information 415 to the point cloud data.

On the other hand, in the penetration list 420 of the area between the grid line ScB and the grid line ScC as illustrated in Fig. 18, for the penetration C, a management symbol "X" of the wall 50 is defined as the identification information 421 of the formation target portion, information "ScB-ScC" indicating the area between the grid line ScB and the grid line ScC is defined as the location 422 of the penetration, a management symbol "C" of the penetration C is defined as the identification information 423 of the penetration, the management symbol "a" of the construction method a of the penetration C is defined as the model 424 of the penetration, and a "link C" is defined as the link information 425 to the point cloud data. In the penetration list 420, for the penetration D, a management symbol "X" of the wall 50 is defined as the identification information 421 of the formation target portion, information "ScB-ScC" is defined as the location 422 of the penetration, a management symbol "D" of the penetration D is defined as the identification information 423 of the penetration, a management symbol "a" of the construction method a of the penetration D is defined as the model 424 of the penetration, and a "link D" is defined as the link information 425 to the point cloud data. That is, the construction methods of the penetrations A to D having the same opening shape and opening size are the same. In addition, in the penetration list 420, for the penetration E, a management symbol "X" of the wall 50 is defined as the identification information 421 of the formation target portion, information "ScB-ScC" is defined as the location 422 of the penetration, a management symbol "E" of the penetration E is defined as the identification information 423 of the penetration, a management symbol "b, c" of the construction method b and the construction method c of the penetration E is defined as the model 424 of the penetration, and a "link E" is defined as the link information 425 to the point cloud data. That is, as a construction method of the penetration E, two types of construction methods b and c are exemplified as candidates.

In addition, the penetration list creation unit 235 outputs the created penetration list to the communication unit 23. As a result, the data of the penetration list is transmitted to the designer terminal 3 via the communication network 4, and the penetration list (table data) is displayed on the display screen 34a of the designer terminal 3. Then, when the designer operates (presses or the like) the link information to the point cloud data associated with a predetermined penetration in the displayed penetration list, a jump to the storage address of the related information such as the picture and the specification of the periphery of the predetermined penetration stored in the site information storage 221 in the storage 22 of the design support device 2 is performed, and the related information is called by the designer terminal 3 and displayed on the display screen 34a.

By the above-described function of displaying the penetration list by the penetration list creation unit 235, the designer can easily and quickly obtain specific related information (spatial information such as photograph, or the like) around the penetration which is a design target.

Note that the format of the penetration list, the configuration of the information specified in the penetration list, and the like are not limited to this example, and can be arbitrarily set. For example, the penetration lists 410, 420 illustrated in Figs. 17 and 18 may be integrated into one. In this case, the penetration list for each penetration formation target portion is created.

### <Design method for forming a penetration in a penetration formation target portion in contact with a radiation-contaminated area>

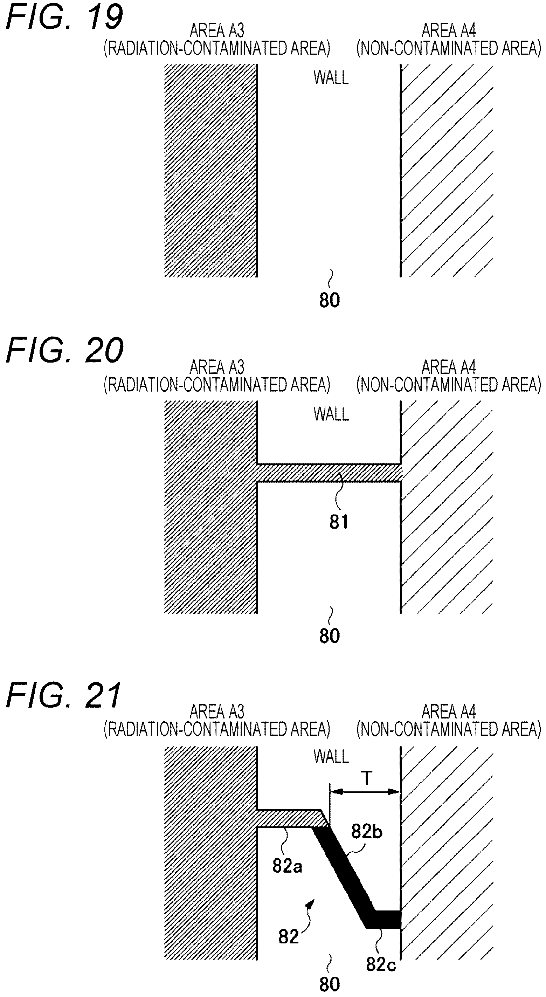

Here, an example of a design method for a penetration in a case where one area partitioned by a penetration formation target portion (a wall, a floor, a ceiling or the like) is a radiation-contaminated area will be described with reference to Figs. 19 to 21. Note that Figs. 19 to 21 are cross-sectional views of a penetration formation area of a wall 80 and a peripheral area thereof.

Now, as shown in Fig. 19, it is assumed that an area A3 to be a radiation-contaminated area and an area A4 to be a non-contaminated area are partitioned by a predetermined wall 80 in the power plant, and a penetration is formed in the wall 80. In this case, as illustrated in Fig. 20, when the penetration 81 is linearly formed in the wall 80 illustrated in Fig. 19 along the thickness direction of the wall 80, the radiation generated in the area A3 (radiation-contaminated area) enters the area A4 (non-contaminated area). Therefore, in order to prevent the radiation from entering the area A4 from the area A3, that is, in order to impart a radiation shielding effect to the penetration of the wall 80, a penetration in which an extending direction of the penetration is bent halfway in the wall 80 (hereinafter, referred to as a "bending penetration") is formed. Fig. 21 illustrates an example thereof.

As illustrated in Fig. 21, a bending penetration 82 includes a straight portion 82a extending in the thickness direction of the wall 80 from the area A3, a bent portion 82b connected to an end portion of the straight portion 82a on a side opposite to a side of the area A3 and extending at a predetermined inclination angle with respect to the thickness direction of the wall 80, and a straight portion 82c connected to an end portion of the bent portion 82b on a side opposite to a side of the straight portion 82a and extending in the thickness direction of the wall 80 from the end portion to the area A4. In the bending penetration 82 having such a configuration, a shielding thickness T of radiation is a distance in the thickness direction of the wall 80 from the end portion of a side of the straight portion 82a of the bent portion 82b to the area A4.

The bending penetration 82 is designed such that the shielding thickness T of radiation is equal to or greater than the required shielding thickness. A design method of the bending penetration 82 is arbitrary. For example, the design of the bending penetration 82 is performed by the designer inputting, as CAD input information, a position of an opening of the bending penetration 82 (the straight portion 82a and the straight portion 82c), and an inclination angle (bending angle) of the bent portion 82b in both areas, and the shielding thickness T. Further, for example, instead of the shielding thickness T, a value obtained by subtracting the shielding thickness T from the thickness of the wall 80 may be used as a design condition of the bending penetration 82. In a case where a plurality of bending penetrations are formed in the wall 80, the shielding thickness T is designed to be equal to or greater than the required shielding thickness in the bending penetration having the minimum shielding thickness T among the plurality of bending penetrations.

In a case where one of the areas defined by the penetration formation target portion (a wall, a floor, a ceiling or the like) is a radiation-contaminated area, the information on the above-described various design conditions of the bending penetration may be appropriately input by a designer based on a construction diagram (see Fig. 11) displayed by the operation of the construction diagram creation unit 232. In this case, the input information on various design conditions of the bending penetration may be stored in the penetration information storage 227 in the storage 22, and displayed as the construction information on the penetration (bending penetration) in the construction diagram. In this case, the designer can easily and quickly recognize the construction requirement of the bending penetration.

### <Effects>

As described above, the design support system 1 and the design support device 2 of the present embodiment have various support functions (for example, each functional unit of the penetration creation support unit 213 illustrated in Fig. 4) that can provide various types of information to the designer (designer terminal 3) as support when designing the penetration with respect to the penetration formation target portion (a wall, a floor, a ceiling or the like) in the virtual space simulating the internal and external configurations of the plant created by the design support device 2. Therefore, in the present embodiment, it is possible to provide a design support technique that facilitates the design of the penetration provided on a wall, a floor, a ceiling, or the like in the plant.

### <Various modifications>

Although the design support system 1 and the design support device 2 according to an embodiment of the present invention have been described above, the above-described embodiment has described the configuration of the device in detail and specifically in order to describe the present invention in an easy-to-understand manner, and is not necessarily limited to one including all the described configurations. Positions, sizes, shapes, ranges, and the like of the components illustrated in the drawings and the like may not represent actual positions, sizes, shapes, ranges, and the like in order to facilitate understanding of the invention. Therefore, the present invention is not necessarily limited to the position, size, shape, range, and the like disclosed in the drawings and the like. In addition, it is possible to add, delete, and replace other configurations for a part of the configuration of the above embodiment. In addition, the illustrated control lines and information lines indicate what is considered to be necessary for the description, and do not necessarily indicate all the control lines and information lines on the product. In practice, it may be considered that almost all the configurations are connected to each other.

The configurations of the design support system 1 and the design support device 2 according to an embodiment of the present invention are not limited to the above embodiment, and various other modifications can be taken without departing from the gist of the present invention described in the claims. For example, the following various modifications can be adopted, and the same effects as those of the above embodiment can be obtained in the following various modifications.

### [Modification 1]

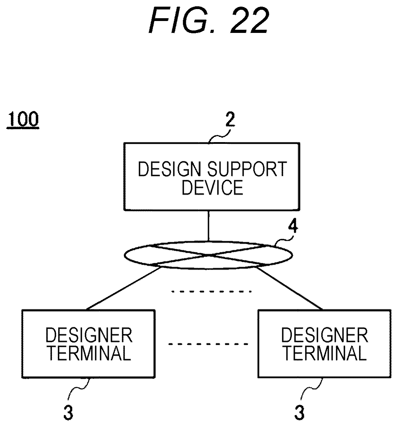

In the design support system 1 of the above embodiment, the configuration example in which one designer terminal 3 is connected to the design support device 2 via the communication network 4 has been described, but the present invention is not limited thereto. A plurality of designer terminals 3 may be connected to the design support device 2 via the communication network 4. Fig. 22 illustrates an example (modification 1).

Fig. 22 is a configuration diagram of a design support system 100 according to modification 1. As illustrated in Fig. 22, the design support system 100 includes the design support device 2 and a plurality of designer terminals 3 (external devices). The design support device 2 is communicably connected to each of the plurality of designer terminals 3 via the communication network 4.

Note that the configurations of the design support device 2 and each designer terminal 3 of the modification 1 are similar to those of the above embodiment (see Figs. 2 to 5). Therefore, the design support device 2 and each designer terminal 3 in this example also have the various functions described in the above embodiment.

Then, each of the plurality of designer terminals 3 can be configured by, for example, an information processing device used by each designer (user) engaged in plant design work, for example, a person in charge of each design work such as system design, equipment design, construction design, and site construction plan. In addition, the designer of each designer terminal 3 can simultaneously access the virtual space created by the design support device 2.

Furthermore, in the design support system 100 of modification 1, attribute information of an object created in the virtual space by a predetermined designer and various types of information regarding the penetration can be referred to by other designers. Furthermore, the configuration of the object created in the virtual space by a predetermined designer (for example, a size, an arrangement position, and the like), various types of information of the penetration (for example, a size, a formation position, a construction method, and the like), and the like can be edited by another designer as necessary.

In the design support system 100 of modification 1, by providing the above function, all designers of upstream design and downstream design engaged in plant design work can access the virtual space and execute design work together in the virtual space simulating the interior and exterior of a facility such as a building of a power plant. That is, in this example, it is possible to support concurrent design work by all designers engaged in plant design work. Therefore, in the design support system 100 and the design support device 2 of this example, communication is achieved among all designers engaged in each design from upstream design to downstream design advanced in a waterfall type, such as design work of a power plant or the like, and information on design contents can also be shared. As a result, for example, in a case where the design of the entire plan includes a plurality of designs as in a design operation of a power plant or the like, a reasonable design can be obtained among the plurality of designs.

Furthermore, the design support device 2 of this example may have a function of enabling a plurality of designers accessing the virtual space to communicate with each other by voice, chat, or the like. In this case, among a plurality of designers, each designer can easily understand ideas, intentions, and the like of other designers, and a more rational design can be realized.

### [Modification 2]

In the above-described embodiment and the modification 1, an example (see Figs. 8, 10, 12, and 13) in which the formation surface of the penetration of the penetration formation target portion is two-dimensionally displayed (displayed in a plane) in the display operation of the installation area candidate of the penetration on the penetration formation target portion (a wall, a floor, a ceiling or the like) by the installation area extraction unit 231, the display operation of the formation position of the penetration on the penetration formation target portion by the position setting unit 233, and the like has been described, but the present invention is not limited thereto. For example, the installation area candidates of the penetration and the formation position of the penetration on the penetration formation target portion (a wall, a floor, a ceiling or the like) may be three-dimensionally displayed.

### [Modification 3]

In the embodiment and the various modifications described above, the CAD tool unit 202 is provided in the design support device 2, and the design support device 2 acquires various CAD input information input by the designer via the information input unit 215 in the CAD tool unit 202. However, the present invention is not limited thereto. A component that acquires information input by a designer may be provided in the design support tool unit 201. In this case, for example, the CAD tool unit 202 may be included in the design support tool unit 201, or the CAD tool unit 202 may not be provided.

### [Others]

In the above embodiment and various modifications, an example in which the control unit 20 included in the design support device 2 is configured by a single device has been described, but the present invention is not limited thereto. For example, the control unit 20 may include a plurality of devices communicably connected to each other.

In the above embodiment and various modifications, an example in which the operation of various functions of the design support device 2 is executed on software has been described, but the present invention is not limited thereto. For example, some or all of the various functions of the design support device 2 may be realized by hardware such as a circuit.

In the above embodiment and various modifications, the design support system 1 and the design support device 2 that can be used in the design work of the power plant have been described, but the present invention is not limited thereto. The design support technique of the present invention described above can also be used for design work of plants other than power plants, and is particularly suitable for design work in a technical field in which a plurality of design works are advanced in a waterfall manner.

## Claims

1. A design support device (2) comprising:
a virtual space creation unit (211) which creates image data of a virtual space simulating a site of a design target;
a penetration creation support unit (213) which has a function of creating a penetration for a penetration formation target portion in the virtual space, and is capable of creating image data of an installation area image in which an image of an area where the penetration is formable is superimposed on an image of the penetration formation target portion in the virtual space in a case where information regarding a design specification of the penetration to be created in the penetration formation target portion is acquired from an external device; and
a communication unit (23) which is communicably connected to the external device, receives information regarding a design specification of the penetration from the external device, and transmits image data of the installation area image created by the penetration creation support unit to the external device.

2. The design support device (2) according to claim 1, **characterized in that**
the penetration creation support unit (213)
determines, in a case where an area where the penetration is formable is not extractable on an image of the penetration formation target portion due to an object installed around the penetration formation target portion, whether or not the object is removable and the penetration is formable in an installation area of the object when the object is removed based on information regarding the object, and
is capable of creating image data of the installation area image in which an image of an area where the penetration is formable is superimposed on an installation area of the object on an image of the penetration formation target portion, in a case of determining that the object is removable and the penetration is formable in an installation area of the object when the object is removed.

3. The design support device (2) according to claim 2, **characterized in that**
the penetration creation support unit (213)
acquires a design condition of the penetration with respect to the penetration formation target portion,
sets information regarding a construction method of the penetration based on a design condition of the penetration, and
creates a construction diagram around the penetration formation target portion which reflects the design condition of the penetration and information regarding the construction method of the penetration.

4. The design support device (2) according to claim 3, **characterized in that**
the penetration creation support unit (213)
creates, in a case where information regarding a formation position of the penetration is input from the external device via the communication unit, image data in which an image of the penetration is superimposed on the formation position on an image of the penetration formation target portion on which an image of the object is superimposed in the virtual space,
determines whether or not an image of the penetration and an image of the object overlap, and
creates, in a case where the image of the penetration overlaps the image of the object, image data in which an image of information indicating that the penetration is not formable at the formation position is further superimposed on an image of the penetration formation target portion on which an image of the object and an image of the penetration are superimposed.

5. The design support device (2) according to claim 4, **characterized in that**
the penetration creation support unit (213)
determines whether or not the penetration formed in the penetration formation target portion is connectable with an elongated object arranged in an area defined by the penetration formation target portion and arranged on a predetermined route set in advance which passes through the penetration in the virtual space, and
creates, in a case of determining that the penetration and the elongated object are not connectable, image data in which an image of information indicating that the penetration and the elongated object are not connectable is superimposed on an image of a peripheral area of the penetration formation target portion including images of the penetration and the elongated object.

6. The design support device (2) according to claim 5, **characterized in that**
the penetration creation support unit (213)
creates, in a case where a formation position of the penetration in the penetration formation target portion is determined in the virtual space, a list in which identification information of the penetration, identification information of the penetration formation target portion, a formation area of the penetration in the penetration formation target portion, information regarding a construction method of the penetration, and information for calling related information of the penetration are associated.

7. The design support device (2) according to claim 6, **characterized in that**
the penetration creation support unit (213)
is capable of creating a bending penetration in which an extending direction of the penetration is bent in a middle of the penetration formation target portion as the penetration to be formed in the penetration formation target portion, in a case where one area defined by the penetration formation target portion is a radiation-contaminated area.

8. The design support device (2) according to claim 6, further comprising a search function unit which searches related information of the penetration, and **characterized in that**
the search function unit is capable of searching related information of the penetration based on identification information of the penetration and identification information of the penetration formation target portion which is a formation target of the penetration.

9. The design support device (2) according to claim 8, **characterized in that**
the search function unit searches for related information of the penetration using generative artificial intelligence.

10. A design support system (1) comprising:
an information processing device used by a user;
a virtual space creation unit (211) which creates image data of a virtual space simulating a site of a design target;
a penetration creation support unit (213) which has a function of creating a penetration for a penetration formation target portion in the virtual space, and is capable of creating image data of an installation area image in which an image of an area where the penetration is formable is superimposed on an image of the penetration formation target portion in the virtual space in a case where information regarding a design specification of the penetration to be created in the penetration formation target portion is acquired from the information processing device; and
a communication unit (23) which is communicably connected to the information processing device, receives information regarding a design specification of the penetration from the information processing device, and transmits image data of the installation area image created by the penetration creation support unit to the information processing device.
